(19) Europäisches Patentamt
European Patent Office
Office européen des brevets

(11) Veröffentlichungsnummer : **0 078 009**
**B1**

(12) # EUROPÄISCHE PATENTSCHRIFT

(45) Veröffentlichungstag der Patentschrift : **07.08.85**

(51) Int. Cl.⁴ : **C 09 B 62/085**, C 09 B 62/51, D 06 P 3/66, D 06 P 3/10

(21) Anmeldenummer : **82109675.7**

(22) Anmeldetag : **20.10.82**

(54) **Wasserlösliche Pyridon-Azoverbindungen, Verfahren zu ihrer Herstellung und ihre Verwendung als Farbstoffe.**

(30) Priorität : **22.10.81 DE 3141908**

(43) Veröffentlichungstag der Anmeldung : **04.05.83 Patentblatt 83/18**

(45) Bekanntmachung des Hinweises auf die Patenterteilung : **07.08.85 Patentblatt 85/32**

(84) Benannte Vertragsstaaten : **CH DE FR GB IT LI**

(56) Entgegenhaltungen :
**FR-A- 2 430 442**
**CHEMICAL ABSTRACTS, Band 95, Nr. 8, August 1981, Seite 73, Nr. 63672c, Columbus, Ohio, USA**
**CHEMICAL ABSTRACTS, Band 95, Nr. 24, Dezember 1981, Seite 75, Nr. 205410s, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Kohlhaas, Folker, Dr.**
**Akazienring 64**
**D-6203 Hochheim am Main (DE)**
Erfinder : **Meininger, Fritz, Dr.**
**Loreleistrasse 7**
**D-6230 Frankfurt am Main 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der faserreaktiven Azofarbstoffe.

Aus der japanischen Offenlegungsschrift Sho-56-037379 und aus der deutschen Offenlegungsschrift 20 50 901 sind bereits Azoverbindungen mit faserreaktiven Farbstoffeigenschaften bekannt, die eine Pyridon-Kupplungskomponente enthalten.

Mit der vorliegenden Erfindung wurden nunmehr neue, wertvolle wasserlösliche Monoazoverbindungen entsprechend der allgemeinen Formel (1)

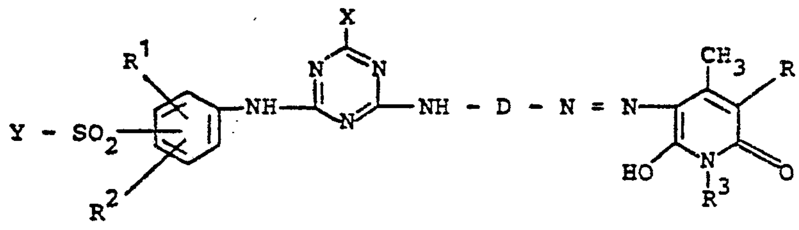

(1)

gefunden. In dieser Formel (1) bedeuten :

$R^1$ ist ein Wasserstoffatom, eine niedere Alkylgruppe, wie die Äthylgruppe und insbesondere Methylgruppe, eine niedere Alkoxygruppe, wie die Äthoxygruppe und insbesondere Methoxygruppe, oder ein Chloratom ;

$R^2$ ist ein Wasserstoffatom, eine niedere Alkylgruppe, wie die Äthylgruppe und insbesondere Methylgruppe, oder eine niedere Alkoxygruppe, wie die Äthoxygruppe und insbesondere die Methoxygruppe ;

$R^3$ ist ein niedere Alkylgruppe, wie die Methyl- oder Propyl- oder insbesondere die Äthylgruppe, die durch eine Hydroxygruppe, eine niedere Alkanoylaminogruppe, wie die Propionylaminogruppe und insbesondere Acetylamino-gruppe, eine Sulfatogruppe (der allgemeinen Formel $—OSO_3M$), eine Carboxygruppe (der allgemeinen Formel —COOM) oder eine Sulfogruppe (der allgemeinen Formel $—SO_3M$) substituiert ist, wobei in diesen Formeln

M ein Wasserstoffatom oder das Äquivalent eines ein-, zwei- oder dreiwertigen Metalls, insbesondere eines Alkali- oder Erdalkalimetalls, wie des Natriums, Kaliums oder Calciums, bedeutet ;

R ist ein Wasserstoffatom oder die Carbamoylgruppe oder bevorzugt die Cyangruppe oder insbesondere bevorzugt die Sulfogruppe (der allgemeinen Formel $—SO_3M$ mit M der obengenannten Bedeutung) ;

D ist der meta- oder para-Phenylenrest, der durch eine oder zwei Sulfogruppen oder durch eine oder zwei Sulfogruppen und eine niedere Alkylgruppe, wie die Äthylgruppe und insbesondere die Methylgruppe, substituiert ist ;

X ist ein Chlor- oder Fluoratom ;

Y ist die Vinylgruppe oder eine Äthylgruppe, die in β-Stellung einen als Anion alkalisch eliminierbaren Rest gebunden enthält, wie beispielsweise die β-Thiosulfatoäthyl-Gruppe (entsprechend der allgemeinen Formel $—CH_2—CH_2—S—SO_3M$ mit M der ober angegebenen Bedeutung), die β-Phosphatoäthyl-Gruppe (entsprechend der allgemeinen Formel $—CH_2—CH_2—OPO_3M_2$ mit M der obengenannten Bedeutung), die β-Chloräthyl-Gruppe, die β-Acetyloxy-äthyl-Gruppe und vorzugsweise die β-Sulfatoäthyl-Gruppe (entsprechend der allgemeinen Formel $—CH_2—CH_2—OSO_3M$ mit M der obenangegebenen Bedeutung).

Die Formelglieder $R^1$, $R^2$, $R^3$ und R können zueinander gleiche oder voneinander verschiedene Bedeutungen haben.

Neben den bereits angegebenen bevorzugten Verbindungen der allgemeinen Formel (1) können noch zusätzlich solche erfindungsgemäßen Azoverbindungen hervorgehoben werden, in welchen das Formelglied $R^1$ ein Wasserstoffatom bedeutet, das Formelglied $R^2$ die Methoxy- oder die Methylgruppe, bevorzugt jedoch ein Wasserstoffatom ist und die Gruppe $—SO_2—Y$ in m-Stellung, insbesondere bevorzugt in p-Stellung zur Aminogruppe gebunden ist. Weiterhin sind diejenigen erfindungsgemäßen Azoverbindungen hervorzuheben, in denen das Formelglied D den durch eine oder zwei Sulfogruppen subsituierten meta- oder para-Phenylenrest darstellt. Ebenso bevorzugt sind diejenigen erfindungsgemäßen Verbindungen, in denen das Formelglied Y die Vinylgruppe, insbesondere jedoch die β-Sulfatoäthyl-Gruppe bedeutet. Weiterhin bevorzugt ist bei dem Formelrest $R^3$ eine Alkylgruppe von 1 bis 3 C-Atomen, die durch eine Sulfogruppe, eine Carboxygruppe oder eine niedere Alkanoylaminogruppe substituiert ist.

Die Angaben « niedere » bedeuten hier wie im folgenden, daß der in der Gruppe enthaltene Alkyl- oder Alkylenrest aus 1 bis 4 C-Atomen besteht.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im Folgenden im allgemeinen Sinne

und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Azoverbindungen der allgemeinen Formel (1). Diese Verfahren sind dadurch gekennzeichnet, daß man eine Diazoniumverbindung eines Amins der allgemeinen Formel (2)

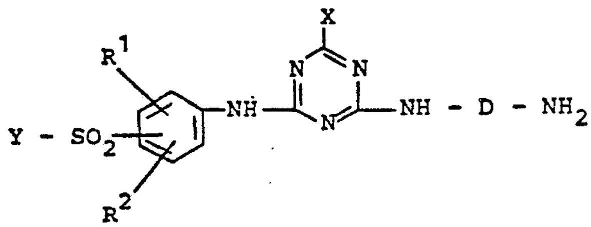

(2)

in welcher $R^1$, $R^2$, D, X und Y die obengenannten Bedeutungen haben, mit einer Pyridonverbindung der allgemeinen Formel (3)

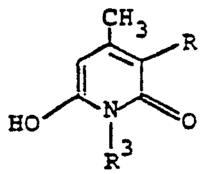

(3)

in welcher R und $R^3$ die obengenannten Bedeutungen haben, kuppelt,
oder daß man eine Aminoazoverbindung der allgemeinen Formel (4)

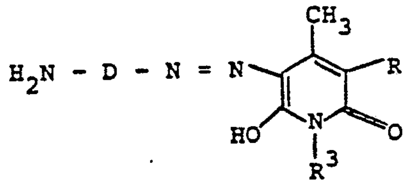

(4)

in welcher D, R und $R^3$ die obengenannten Bedeutungen haben, mit einer Dihalogentriazin-Verbindung der allgemeinen Formel (5)

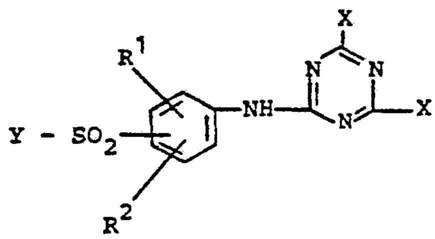

(5)

in welcher $R^1$, $R^2$, X und Y die obengenannten Bedeutungen haben, umsetzt,
oder daß man eine Dihalogentriazin-Verbindung der allgemeinen Formel (6)

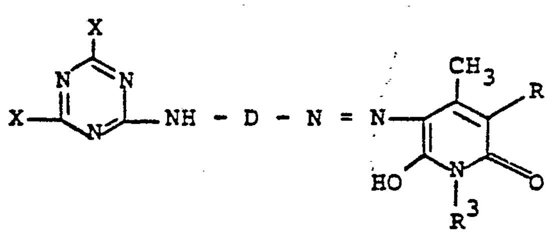

(6)

in der D, X, R und $R^3$ die obengenannten Bedeutungen haben, mit einer Aminoverbindung der allgemeinen Formel (7)

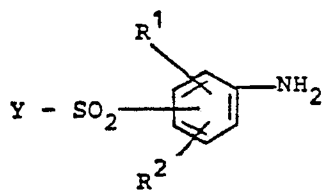

(7)

in welcher $R^1$, $R^2$ und Y die obengenannten Bedeutungen haben, umsetzt.

In den Ausgangsverbindungen der Formeln (2, (5) und (7) kann der Formelrest Y auch die β-Hydroxyäthyl-Gruppe bedeuten. Die so herstellbaren Verbindungen entsprechend der allgemeinen Formel (1), in welcher hier Y die β-Hydroxyäthyl-Gruppe bedeutet, lassen sich erfindungsgemäß mittels eines entsprechenden Veresterungs- oder Acylierungsmittels analog bekannten Verfahrensweisen in die entsprechenden erfindungsgemäßen Verbindungen der Formel (1) überführen, in welcher Y für eine Äthylgruppe steht, die in β-Stellung durch eine Estergruppe substituiert ist. Bevorzugt ist hierbei als Veresterung die Sulfatisierung, d. h. die Überführung der β-Hydroxyäthyl-Gruppe in die β-Sulfatoäthyl-Gruppe analog den zahlreich aus der Literatur bekannten Verfahrensweisen, wobei als Sulfatisierungsmittel vorzugsweise konzentrierte Schwefelsäure oder Schwefeltrioxid enthaltende Schwefelsäure verwendet wird.

Die als Ausgangsverbindungen dienenden Amine der allgemeinen Formel (2) können analog bekannten Verfahrensweisen hergestellt werden, beispielsweise durch Umsetzung einer Diaminoverbindung der allgemeinen Formel $H_2N—D—NH_2$ mit D der obengenannten Bedeutung mit einer Dihalogentriazinverbindung der oben angegebenen und definierten allgemeinen Formel (5) oder durch Umsetzung von Cyanurchlorid (2,4,6-Trichlor-1,3,5-triazin) oder von Cyanurfluorid (2,4,6-Trifluor-1,3,5-triazin) zunächst mit einer Diaminoverbindung der oben definierten Formel $H_2N—D—NH_2$ zu einer Verbindung der allgemeinen Formel (8)

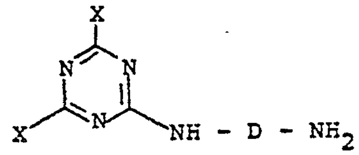

(8)

mit D und X der obengenannten Bedeutung und anschließend mit einem Amin der oben angegebenen und definierten allgemeinen Formel (7).

Ebenso können analog bekannten Verfahrensweisen die als Ausgangsverbindungen dienenden Dihalogentriazin-Verbindungen entsprechend der allgemeinen Formel (5) hergestellt werden, beispielsweise durch Umsetzung von Cyanurchlorid oder Cyanurfluorid mit einem Amin der obenangegebenen und definierten allgemeinen Formel (7).

Die Synthese der Dihalogentriazin-Verbindungen der allgemeinen Formel (6) kann, analog bekannten Verfahrensweisen, durch Kondensation von Cyanurchlorid oder Cyanurfluorid mit einer Aminoazoverbindung der oben angegebenen und definierten allgemeinen Formel (4) oder durch Umsetzung einer Diazoniumverbindung eines Amins der oben angegebenen und definierten allgemeinen Formel (8) mit einer Pyridonverbindung der oben angegebenen und definierten allgemeinen Formel (3) erfolgen.

Sowohl die Umsetzung von Cyanurchlorid oder Cyanurfluorid mit einer Aminoazoverbindung der allgemeinen Formel (4) zur Verbindung der allgemeinen Formel (6) als auch die Umsetzung von Cyanurchlorid oder Cyanurfluorid mit einer Aminoverbindung der allgemeinen Formel (7) zur Verbindung der allgemeinen Formel (5) kann in organischem oder wäßrigorganischem Medium ausgeführt werden. Vorzugsweise geschieht sie in wäßrigem Medium unter Zusatz säurebindender Mittel, wie Alkali- oder Erdalkalicarbonaten, Alkali- oder Erdalkalihydrogencarbonaten oder -hydroxyden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin oder Triäthylamin oder Chinolin. Diese Kondensationsreaktionen werden bei einer Temperatur zwischen − 10 °C und + 40 °C, vorzugsweise zwischen − 10 °C und + 30 °C, insbesondere bevorzugt bei einer Temperatur zwischen 0 °C und + 10 °C, sowie bei einem pH-Wert zwischen 1,0 und 7,0, bevorzugt zwischen 3,5 und 5, durchgeführt.

Die erfindungsgemäße Umsetzung der Dihalogentriazinylamino-Verbindungen der allgemeinen Formeln (5), (6) und (8) mit entsprechenden Aminoverbindungen der allgemeinen Formel (4), der allgemeinen Formel (7) und der oben definierten allgemeinen Formel $H_2N—D—NH_2$ zu den Verbindungen der allgemeinen Formel (1) bzw. zu den Zwischenverbindungen der allgemeinen Formel (2) kann ebenso in organischem oder wäßrigorganischem Medium erfolgen. Vorzugsweise werden sie jedoch in wäßrigem Medium durchgeführt, wobei erforderlichenfalls ein säurebindendes Mittel, wie die oben angegebenen, zugesetzt wird. Die Umsetzung der Aminogruppen mit dem Halogen der Triazinverbindungen in den erfindungsgemäßen Verfahren wird vorzugsweise bei einer Temperatur zwischen 10 und 60 °C, insbesondere bevorzugt zwischen 20 und 50 °C, und bei einem pH-Wert zwischen 2 und 9, insbesondere zwischen 3 und 8, durchgeführt.

Die Diazotierung der Aminoverbindungen der allgemeinen Formel (2) bzw. der allgemeinen Formel (8) erfolgt analog bekannten Verfahrensweisen, beispielsweise in wäßrig-organischem und vor allem in wäßrigem, saurem Medium durch salpetrige Säure. Die Umsetzung der Diazoniumverbindungen mit den Pyridonverbindungen der allgemeinen Formel (3) wird ebenso analog bekannten Verfahrensweisen, beispielsweise in wäßrig-organischem, vorwiegend aber in wäßrigem Medium, im schwach sauren bis neutralen, gegebenenfalls sehr schwach alkalischem pH-Bereich ausgeführt.

Aminoverbindungen der allgemeinen Formel (7), die als Ausgangsverbindungen zur Herstellung der erfindungsgemäßen Verbindungen dienen, sind beispielsweise 1-Amino-3-(β-sulfatoäthylsulfonyl)-benzol, 1-Amino-2-methoxy-5-(β-sulfatoäthylsulfonyl)-benzol, 1-Amino-2-methoxy-4-(β-sulfatoäthylsulfo-

nyl)-benzol, 1-Amino-2-methyl-5-(β-sulfatoäthylsulfonyl)-benzol, 1-Amino-2-methyl-4-(β-sulfatoäthylsulfonyl)-benzol, 1-Amino-4-methoxy-5-(β-sulfatoäthylsulfonyl)-benzol, 1-Amino-4-methyl-5-(β-sulfatoäthylsulfonyl)-benzol, 1-Amino-2-methoxy-5-methyl-4-(β-sulfatoäthylsulfonyl)-benzol, 1-Amino-2,5-dimethoxy-4-(β-sulfatoäthylsulfonyl)-benzol, 1-Amino-2,4-dimethoxy-5-(β-sulfatoäthylsulfonyl)-benzol, 1-Amino-2-methyl-5-methoxy-4-(β-sulfatoäthylsulfonyl)-benzol, 2-Chlor-1-amino-5-(β-sulfatoäthylsulfonyl)-benzol, 4-Chlor-1-amino-2-methyl-3-(β-sulfatoäthylsulfonyl)-benzol, 5-Chlor-1-amino-2-methoxy-4-(β-sulfatoäthylsulfonyl)-benzol sowie bspw. die entsprechenden β-Thiosulfatoäthylsulfonyl-, β-Phosphatoäthylsulfonyl-, β-Chloräthylsulfonyl-, β-Acetoxyäthylsulfonyl- und Vinylsulfonyl-Derivate und gegebenenfalls β-Hydroxyäthylsulfonyl-Derivate dieser β-Sulfatoäthylsulfonyl-Verbindungen, des weiteren bevorzugt 1-Amino-4-(β-sulfatoäthylsulfonyl)-benzol und dessen entsprechende Thiosulfatoäthyl-, Phosphatoäthyl-, Chloräthyl-, Acetoxyäthyl- und Vinyl-Abkömmlinge und gegebenenfalls β-Hydroxyäthyl-Abkömmlinge.

Pyridonverbindungen entsprechend der allgemeinen Formel (3), die als Ausgangsverbindungen zur Herstellung der erfindungsgemäßen Azoverbindungen dienen, sind beispielsweise 1-(β-Hydroxyäthyl)-4-methyl-6-hydroxy-2-pyridon, 1-(β-Hydroxyäthyl)-3-cyan-4-methyl-6-hydroxy-2-pyridon, 1-(β-Hydroxyäthyl)-3-carbamoyl-4-methyl-6-hydroxy-2-pyridon, 1-(β-Hydroxyäthyl)-4-methyl-6-hydroxy-2-pyridon-3-sulfonsäure, 1-(β-Sulfatoäthyl)-4-methyl-6-hydroxy-2-pyridon, 1-(β-Sulfatoäthyl)-3-cyan-4-methyl-6-hydroxy-2-pyridon, 1-(β-Sulfatoäthyl)-3-carbamoyl-4-methyl-6-hydroxy-2-pyridon, 1-(β-Sulfatoäthyl)-4-methyl-6-hydroxy-2-pyridon-3-sulfonsäure, 1-(β-Sulfatoäthyl)-4-methyl-6-hydroxy-2-pyridon, 1-(β-Sulfatoäthyl)-3-carbamoyl-4-methyl-6-hydroxy-2-pyridon, 1-(β-Sulfatoäthyl)-4-methyl-6-hydroxy-2-pyridon-3-sulfonsäure, 1-Carboxymethyl-4-methyl-6-hydroxy-2-pyridon, 1-Carboxymethyl-3-cyan-4-methyl-6-hydroxy-2-pyridon, 1-Carboxymethyl-3-carbamoyl-4-methyl-6-hydroxy-2-pyridon, 1-Carboxymethyl-4-methyl-6-hydroxy-2-pyridon-3-sulfonsäure, 1-(β-Carboxyäthyl)-4-methyl-6-hydroxy-2-pyridon, 1-(β-Carboxyäthyl)-3-cyan-4-methyl-6-hydroxy-2-pyridon, 1-(β-Carboxyäthyl)-3-carbamoyl-4-methyl-6-hydroxy-2-pyridon, 1-(β-Carboxyäthyl)-4-methyl-6-hydroxy-2-pyridon-2-sulfonsäure, 1-(β-Acetylaminoäthyl)-3-cyan-4-methyl-6-hydroxy-2-pyridon, 1-(β-Acetylaminoäthyl)-3-carbamoyl-4-methyl-6-hydroxy-2-pyridon, 1-(β-Acetylaminoäthyl)-4-methyl-6-hydroxy-2-pyridon-3-sulfonsäure, 1-(β-Acetylaminopropyl)-4-methyl-6-hydroxy-2-pyridon, 1-(β-Acetylaminopropyl)-3-cyan-4-methyl-6-hydroxy-2-pyridon, 1-(β-Acetylaminopropyl)-3-carbamoyl-4-methyl-6-hydroxy-2-pyridon und 1-β-Acetylamino-propyl-4-methyl-6-hydroxy-2-pyridon-3-sulfonsäure.

Die Diaminoverbindungen entsprechend der oben angegebenen allgemeinen Formel $H_2N—D—NH_2$, die als Ausgangsverbindungen zur Herstellung der erfindungsgemäßen Azoverbindungen dienen können, sind beispielsweise 1,3-Diaminobenzol-4-sulfonsäure, 1,3-Diaminobenzol-5-sulfonsäure, 1,4-Diaminobenzol-2-sulfonsäure, 2,4-Diaminotoluol-5-sulfonsäure, 2,4-Diaminotoluol-6-sulfonsäure, 2,5-Diaminotoluol-4-sulfonsäure, 1,3-Diaminobenzol-4,6-disulfonsäure und 1,4-Diaminobenzol-2,5-disulfonsäure.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern ; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der allgemeinen Formel (1) lassen sich auf den genannten

Substraten, insbesondere auf den genannten Fasermaterialien, nach den für wasserlösliche, insbesondere nach den für wasserlösliche faserreaktive Farbstoffe bekannten Anwendungstechniken applizieren und fixieren. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls, neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 60 und 105 °C, gegebenenfalls bei Temperaturen bis zu 120 °C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschließendes Dämpfen bei 100 bis 103 °C, oder zweiphasig, beispielsweise durch Bedrucken mit neutraler oder schwach saurer Druckfarbe und anschließendem Fixieren entweder durch Hindurchführen durch ein heißes elektrolythaltiges Bad oder durch Überklotzen mit einer alkalischen elektrolythaltigen Klotzflotte und anschließendem Verweilen dieses behandelten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Bei der Fixierung mittels Trockenhitze nach den üblichen Thermofixierverfahren verwendet man Heißluft von 120 bis 200 °C.

Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und ebenfalls Erdalkalimetalle von organischen oder anorganischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindung gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure und/oder auf Basis eines Umsetzungsproduktes von beispielsweise Stearylamin mit Äthylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit erfindungsgemäßen Verbindungen der allgemeinen Formel (1) hergestellten Färbungen und Drucke zeichnen sich in der Regel durch klare, grünstichig über rotstichig gelbe bis gelbstichig orange Nuancen und hohe Farbstärken aus.

Die Färbungen und Drucke besitzen, insbesondere auf Cellulosefasermaterialien, eine sehr gute Lichtechtheit und gute bis sehr gute Naßechtheiten, wie beispielsweise Wasch-, Walk-, Wasser-, Seewasser-, Überfärbe- und Schweißechtheiten, desweiteren eine gute Plissierechtheit, Bügelechtheit und Reibechtheit.

Ebenso von Bedeutung ist die erfindungsgemäße Verwendung der Verbindungen der allgemeinen Formel (1) auch für das faserreaktive Färben von Wolle. Insbesondere läßt sich auch filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298) ; J. Soc.

Dyers and Colourists *1972*, 93-99, und *1975*, 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100 °C durchgeführt, jedoch können sie auch in geschlossenen Färbeapparaturen bei Temperaturen bis zu 106 °C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, klare, grünstichig über rotstichig gelbe bis gelbstichig orange Färbungen. Bei Anwendung von Färbetemperaturen von 100 bis 106 °C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionellen ähnlichen, bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60 °C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

## Beispiel 1

a) Eine wäßrige Lösung mit einem pH-Wert von 6 bis 7 von 56 Teilen 1-Amino-4-(β-sulfatoäthylsulfonyl)-benzol in 300 Teilen Wasser wird in eine Suspension von 38,6 Teilen Cyanurchlorid und 1 Teil eines handelsüblichen Netzmittels in 50 Teilen Wasser und 200 Teilen Eis einlaufen gelassen. Mit Natriumbicarbonat wird während der Acylierungsreaktion ein pH-Wert zwischen 2 und 4 gehalten, während die Mischung kräftig bei einer Temperatur zwischen 0 und 10 °C gerührt wird. — Der Umsetzungsgrad ist größer als 99 %.

b) Zur Herstellung der Diazokomponente entsprechend der allgemeinen Formel (2) wird die unter a) erhaltene Suspension des Monoacylierungsproduktes langsam unter Rühren zu einer 40 °C warmen, neutralen Lösung von 37,5 Teilen 1,3-Phenylendiamin-4-sulfonsäure in 200 Teilen Wasser gegeben ; bei dieser zweiten Kondensationsreaktion wird ein pH-Wert von 4 bis 5 mittels Natriumbicarbonat gehalten.

c) Zur Diazotierung der Aminoverbindung wird das unter b) erhaltene Reaktionsgemisch mit 200 Teilen Eis und 60 Teilen einer 31 %igen wäßrigen Salzsäure versetzt ; anschließend wird mit einer wäßrigen Lösung von 14 Teilen Natriumnitrit in üblicher Weise diazotiert. Sodann werden 46,5 Teile 1-(β-Sulfoäthyl)-4-methyl-6-hydroxy-2-pyridon eingetragen, und zur Kupplungsreaktion wird ein pH-Wert zwischen 4,5 und 5,5 mittels Natriumbicarbonat gehalten.

Die so hergestellte erfindungsgemäße Monoazoverbindung wird in üblicher Weise aus dem wäßrigen Syntheseansatz isoliert, beispielsweise durch Eindampfen oder Sprühtrocknung der neutralen Syntheselösung oder durch Aussalzen mit beispielsweise Kaliumchlorid. Es wird ein elektrolythaltiges, gelbes Pulver mit dem Alkalimetallsalz, wie beispielsweise dem Natrium- oder Kaliumsalz, der Verbindung der Formel

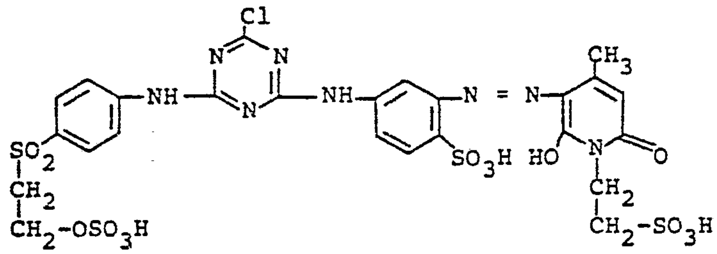

erhalten. Ihr Absorptionsmaximum im sichtbaren Bereich liegt in wäßriger Lösung bei 416 nm.

Diese erfindungsgemäße Azoverbindung zeigt sehr gute Farbstoffeigenschaften, insbesondere sehr gute faserreaktive Farbstoffeigenschaften, und liefert auf den in der Beschreibung genannten Materialien, wie insbesondere Cellulosefasermaterialien, wie beispielsweise Baumwolle, nach den in der Technik üblichen Applikations- und Fixiermethoden, insbesondere nach solchen, die für faserreaktive Farbstoffe beschrieben und angewandt werden, farbstarke, klare grünstichig gelbe Färbungen und Drucke von guten Lichtechtheiten und guten Naßechtheiten, wie insbesondere guten Wasch-, Walk-, Schweiß- und Überfärbeechtheiten.

d) Die unter c) als Kupplungskomponente eingesetzte Pyridonverbindung kann nach an sich bekannten Verfahren durch Kondensation von Taurin mit Cyanessigsäureestern, Umsetzung dieses Reaktionsproduktes mit Acetessigsäureestern in wäßriger Lösung und anschließender Verseifung und Decarboxylierung des entstehenden 1-(β-Sulfoäthyl)-3-cyan-4-methyl-6-hydroxy-2-pyridons mit Schwefelsäure hergestellt werden.

## Beispiel 2

a) Eine neutrale Lösung von 54 Teilen 1,4-Phenylendiamin-2,5-disulfonsäure in 200 Teilen Wasser wird nach Zugabe von 200 Teilen Eis und 70 Teilen 31 %iger Salzsäure mittels einer wäßrigen Lösung von 14 Teilen Natriumnitrit diazotiert. Danach werden 52 Teile 1-(β-Sulfoäthyl)-3-cyan-4-methyl-6-hydroxy-2-pyridon eingetragen, wobei während der Kupplungsreaktion der pH-Wert mittels Natriumbicarbonat auf 5 bis 6 gestellt wird.

b) Die so unter a) hergestellte Monoazoverbindung wird, vorzugsweise in Form des unter a) erhaltenen, schwach sauren bis neutralen Syntheseansatzes, bei einer Temperatur von 0 bis 5 °C unter Rühren zu einer Suspension gegeben, die durch Einlaufenlassen einer Lösung von 18,4 Teilen Cyanurchlorid in 80 Teilen Aceton in ein Gemisch aus 100 Teilen Wasser und 200 Teilen Eis hergestellt wurde. Während dieser Monoacylierungsreaktion der Monoazoverbindung wird mittels Natriumbicarbonat ein pH-Wert von 4 bis 5 eingehalten.

c) Die unter b) hergestellte Lösung des Monokondensationsproduktes wird zu einer neutralen Lösung aus 56 Teilen 1-Amino-4-(β-sulfatoäthylsulfonyl)-benzol in 200 Teilen Wasser gegeben, die Temperatur wird danach auf 35 °C erhöht und der pH-Wert dieser zweiten Kondensationsreaktion mittels Natriumbicarbonat zwischen 6 und 6,5 gehalten.

Die so hergestellte erfindungsgemäße Monoazoverbindung wird in üblicher Weise isoliert, beispielsweise durch Aussalzen mit Natriumchlorid. Es wird ein elektrolythaltiges Pulver erhalten, das das Alkalimetallsalz, wie Natriumsalz, der Verbindung der Formel

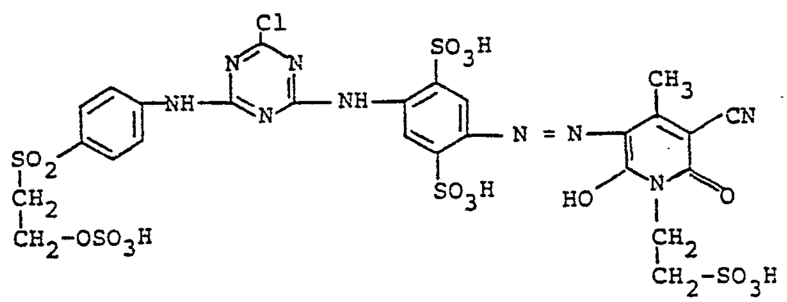

enthält. Diese zeigt in wäßriger Lösung im sichtbaren Bereich ihrer Absorption ein Maximum bei 448 nm.

Diese erfindungsgemäße Azoverbindung zeigt sehr gute Farbstoffeigenschaften, insbesondere sehr gute faserreaktive Farbstoffeigenschaften, und liefert auf den in der Beschreibung genannten Materialien, wie insbesondere Cellulosefasermaterialien, wie beispielsweise Baumwolle, nach den in der Technik üblichen Applikations- und Fixiermethoden, insbesondere solchen, die für faserreaktive Farbstoffe beschrieben und angewandt werden, farbstarke, klare, orangefarbene Färbungen und Drucke von guten Lichtechtheiten und guten Naßechtheiten, wie insbesondere guten Wasch-, Walk-, Schweiß- und Überfärbeechtheiten.

Beispiel 3

a) Zur Herstellung einer Monoazoverbindung als Ausgangsverbindung verfährt man gemäß der Verfahrensweise des Beispieles 2a), setzt jedoch anstelle der dort verwendeten Kupplungskomponente 1-(β-Carboxyäthyl)-3-carbamoyl-4-methyl-6-hydroxy-2-pyridon als Kupplungskomponente in äquivalenter Menge ein.

b) Das gemäß dem Syntheseweg von Beispiel 1a) erhaltene Reaktionsgemisch der Monoacylierung wird bei 40 °C und einem pH-Wert zwischen 5 und 6 mit der hier unter a) erhaltenen Monoazoverbindung versetzt. Bei dieser zweiten Kondensationsreaktion wird die erfindungsgemäße Verbindung der Formel

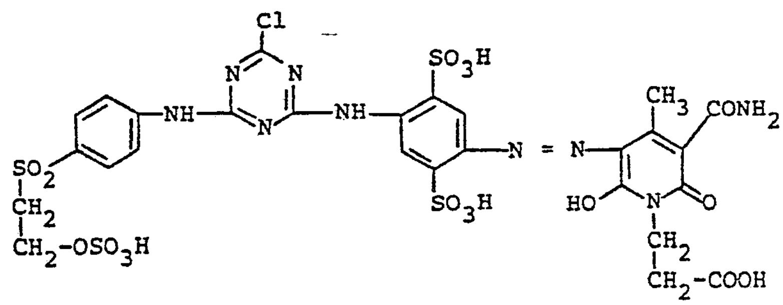

in Form ihres Natrium- oder Kaliumsalzes, beispielsweise durch Aussalzen mit Natrium- oder Kaliumchlorid, erhalten. Sie besitzt einen rotstichig gelben Farbton und ähnliche Farbstoffeigenschaften wie die erfindungsgemäße Verbindung des Beispieles 2. Das Absorptionsmaximum dieses erfindungsgemäßen Farbstoffes liegt bei 436 nm.

c) Die hier unter a) eingesetzte Kupplungskomponente wird nach bekannten Verfahren aus β-Alanin, Cyanessigsäureestern und Acetessigsäureestern hergestellt, wobei zunächst 1-(β-Carboxyäthyl)-3-cyan-4-methyl-6-hydroxy-2-pyridon entsteht, das durch partielle Hydrolyse mit konzentrierter Schwefelsäure zu 1-(β-Carboxyäthyl)-2-carbamoyl-4-methyl-6-hydroxy-2-pyridon umgesetzt wird.

Beispiel 4

Eine Suspension von 56 Teilen 4-(β-Sulfatoäthylsulfonyl)-anilin in 300 Teilen Wasser wird auf einen pH-Wert von 4,0 eingestellt und mittels Eis auf eine Temperatur zwischen − 2 °C und 0 °C gekühlt. Unter kräftigem Rühren werden sodann 32 Teile 2,4,6-Trifluor-1,3,5-triazin (Cyanurfluorid) zugegeben, wobei gleichzeitig mittels einer wäßrigen Natriumbicarbonatlösung der pH-Wert bei 3,5 gehalten wird. Nach einigen Minuten ist kein Amin mehr nachweisbar. Die erhaltene Suspension wird sodann bei 10-15 °C zu einer neutralen wäßrigen Lösung von 54 Teilen 1,3-Phenylendiamin-4,6-disulfonsäure in 250 Teilen Wasser gegeben, und während dieser Kondensationsreaktion wird deren pH-Wert zwischen 4 und 5 mittels einer Natriumcarbonatlösung gehalten. Sodann gibt man 100 Teile Eis und 60 Teile 31 %iger Salzsäure hinzu und diazotiert mit einer wäßrigen Lösung von 14 Teilen Natriumnitrit. Zur Kupplung trägt man anschließend 42 Teile 1-Carboxymethyl-3-cyan-4-methyl-6-hydroxy-2-pyridon ein, und ein pH-Wert von 4,5 bis 5,5 wird eingestellt. Nach Beendigung der Kupplung wird die so hergestellte erfindungsgemäße Monoazoverbindung auf übliche Weise isoliert, beispielsweise durch Sprühtrocknung oder durch Aussalzen. Man erhält sie in Form ihres Alkalimetallsalzes, wie Natrium- oder Kaliumsalzes. Sie besitzt, in Form der freien Säure geschrieben, die Formel

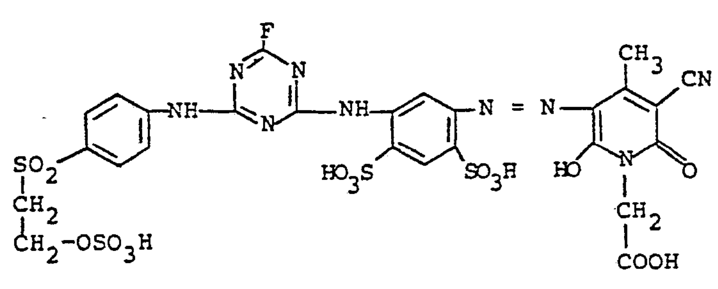

Die erfindungsgemäße Azoverbindung besitzt im sichtbaren Bereich ein Absorptionsmaximum bei 429 nm.

Sie zeigt sehr gute faserreaktive Farbstoffeigenschaften und färbt beispielsweise Cellulosefasermaterialien in farbstarken, gelben Tönen nach den in der Technik üblichen Applikations- und Fixiermethoden. Die erhaltenen Färbungen und Drucke zeigen sehr gute Lichtechtheiten und Naßechtheitseigenschaften, wie beispielsweise gute Wasch-, Walk-, Schweiß-, Überfärbe- und Chlorbadewasserechtheiten.

Die hier als Kupplungskomponente eingesetzte Pyridonverbindung wird wie das in Beispiel 3

genannte 1-(β-Carboxyäthyl)-3-cyan-4-methyl-6-hydroxy-2-pyridon hergestellt, wobei man allerdings anstelle des β-Alanins Aminoessigsäure als Ausgangsverbindung einsetzt.

Beispiel 5

Man synthetisiert eine erfindungsgemäße Azoverbindung gemäß den Verfahrensangaben des Beispieles 1, ersetzt jedoch in dem Beispiel 1a) das 4-(β-Sulfatoäthylsulfonyl)-anilin durch 60 Teile 4-(β-Thiosulfatoäthylsulfonyl)-anilin. Nach Aufarbeitung der Syntheselösung und Isolierung erhält man ein elektrolythaltiges Pulver mit dem Alkalimetallsalz der Verbindung der Formel

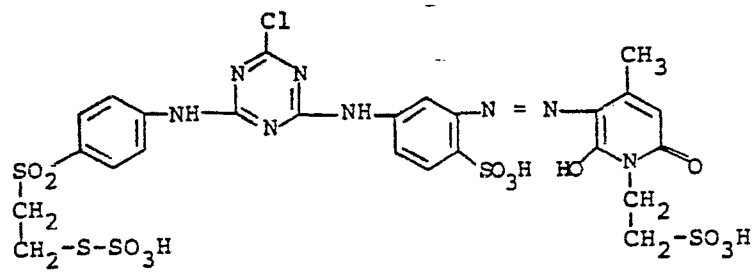

das sehr gute Farbstoffeigenschaften besitzt und beispielsweise auf Baumwolle nach den in der Technik üblichen Applikations- und Fixiermethoden, insbesondere solchen, die für faserreaktive Farbstoffe angewandt werden, farbstarke, grünstichig gelbe Färbungen und Drucke von guten Licht- und Naßechtheitseigenschaften, wie guten Wasch-, Walk- und Überfärbeechtheiten sowie guten Schweißechtheiten, liefert. Die Absorption im Sichtbaren ist der der erfindungsgemäßen Monoazoverbindung des Beispieles 1 gleich.

Beispiel 6

Zur Herstellung einer erfindungsgemäßen Azoverbindung verfährt man gemäß den Angaben des Beispieles 2, ersetzt jedoch dort die im Beispiel 2c) verwendete wäßrige Lösung des 4-(β-Sulfatoäthylsulfonyl)-anilins durch eine Lösung von 39 Teilen 4-Vinylsulfonyl-anilin in 200 Volumenteilen Aceton, die man in eine gemäß Beispiel 2 b) hergestellte Lösung des zweiten Kondensationsproduktes laufen läßt.

Nach der üblichen Aufarbeitung der Syntheselösung und Isolierung erhält man ein elektrolythaltiges Pulver mit dem Alkalimetallsalz, wie beispielsweise Natriumsalz, der Verbindung der Formel

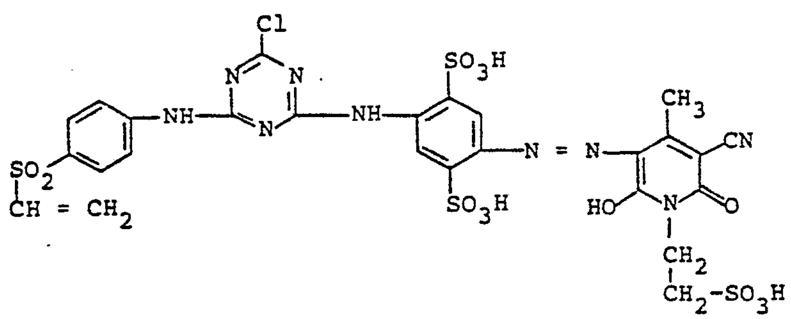

Diese erfindungsgemäße Verbindung zeigt in der sichtbaren Absorption ein Maximum bei 448 nm.

Sie zeigt sehr gute faserreaktive Farbstoffeigenschaften und liefert nach den in der Technik üblichen Applikations- und Fixiermethoden beispielsweise auf Baumwolle, kräftige, orangefarbene Färbungen und Drucke mit guten Licht- und Naßechtheitseigenschaften ; die Qualität der mit dieser erfindungsgemäßen Monoazoverbindung erhältlichen Färbungen ist mit derjenigen vergleichbar, die die mit der erfindungsgemäßen Azoverbindung des Beispieles 2 erhältlichen Färbungen besitzen.

Beispiel 7

Man verfährt zur Herstellung einer erfindungsgemäßen Monoazoverbindung gemäß der Verfahrensweise des Beispieles 2, ersetzt jedoch dort die wäßrige Lösung des 4-(β-Sulfatoäthylsulfonyl)-anilins im Verfahrensschritt c) durch 46 Teile pulverförmiges 4-(β-Chloräthylsulfonyl)-anilin und trägt dieses in die 2b) erhaltene Lösung des zweiten Kondensationsproduktes ein.

Nach Aufarbeitung der Syntheselösung und Isolierung erhält man ein elektrolythaltiges Pulver mit dem Alkalimetallsalz der Verbindung der Formel

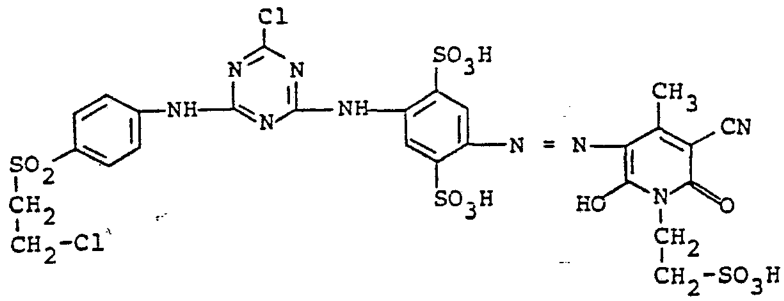

Dieses besitzt sehr gute Farbstoffeigenschaften und färbt beispielsweise Baumwolle nach den in der Technik für faserreaktive Farbstoffe üblichen Applikations- und Fixiermethoden in farbstarken, orangefarbenen Tönen von guten Licht- und Naßechtheitseigenschaften.

Beispiele 8 bis 146

In den nachfolgenden Tabellenbeispielen sind weitere erfindungsgemäße Monoazoverbindungen entsprechend der allgemeinen Formel (1) mit Hilfe ihrer Komponenten, aus denen sie zusammen mit dem Rest des Cyanurchlorids oder Cyanurfluorids aufgebaut sind, beschrieben. Sie lassen sich aus diesen Aminoverbindungen und Cyanurchlorid bzw. Cyanurfluorid und den Kupplungskomponenten in erfindungsgemäßer Weise, wie beispielsweise nach einer in den obigen Beispielen 1 bis 7 beschriebenen Verfahrensvarianten, herstellen. Sie werden vorzugsweise in Form ihrer Alkalimetallsalze, wie Natrium- oder Kaliumsalze, isoliert. Die für sie angegebenen Ausgangskomponenten sind, sofern sie eine Säuregruppe besitzen, in Form der freien Säure angegeben.

Diese erfindungsgemäßen Monoazoverbindungen der Beispiele 8 bis 146 zeigen ebenfalls sehr gute faserreaktive Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel für die Färbung auf Baumwolle angegebenen Farbton.

In den Beispielen 8 bis 146 haben die Formelglieder $Z_1$ bis $Z_6$ folgende Bedeutungen (wobei sie, sofern sie eine saure Gruppe enthalten, in Form der freien Säure angegeben sind):

$Z_1$ ist $-SO_2-CH_2-CH_2-OSO_3H$
$Z_2$ ist $-SO_2-CH_2-CH_2-S-SO_3H$
$Z_3$ ist $-SO_2-CH_2-CH_2-Cl$
$Z_4$ ist $-SO_2-CH=CH_2$
$Z_5$ ist $-SO_2-CH_2-CH_2-O-CO-CH_3$
$Z_6$ ist $-SO_2-CH_2-CH_2-OPO_3H_2$.

(Siehe Tabelle Seite 12 ff.)

| Bsp. | Diamin der allg. Formel $H_2N$-D-$NH_2$ | Substituent X | Amin der allg. Formel (7) | Pyridonverbindung der allg. Formel (3) | Farbton |
|---|---|---|---|---|---|
| 8 | 2,4-Diaminotoluol-6-sulfonsäure | Cl | 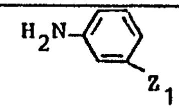 | 1-(ß-Sulfoäthyl)-4-methyl-6-hydroxy-2-pyridon | grünstichig gelb |
| 9 | 1,3-Diaminobenzol-4-sulfonsäure | Cl | 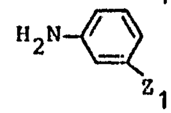 | 1-(ß-Sulfoäthyl)-4-methyl-6-hydroxy-2-pyridon | grünstichig gelb |
| 10 | dito | Cl | 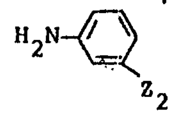 | dito | grünstichig gelb |
| 11 | dito | Cl | 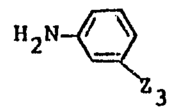 | dito | grünstichig gelb |
| 12 | dito | Cl | 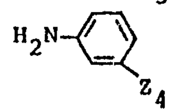 | dito | grünstichig gelb |
| 13 | dito | Cl | 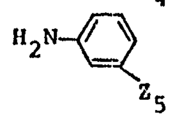 | dito | grünstichig gelb |
| 14 | dito | Cl | 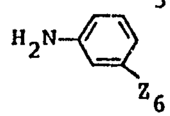 | dito | grünstichig gelb |
| 15 | dito | F | 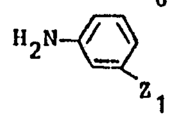 | dito | grünstichig gelb |
| 16 | dito | Cl | 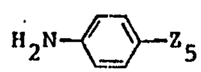 | dito | grünstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 17 | 1,3-Diaminobenzol-4-sulfonsäure | Cl | 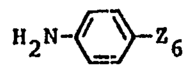 | 1-(ß-Sulfoäthyl)-4-methyl-6-hydroxy-2-pyridon | grünstichig gelb |
| 18 | dito | F | 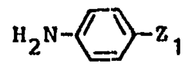 | dito | grünstichig gelb |
| 19 | dito | Cl | 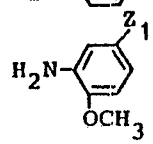 | dito | grünstichig gelb |
| 20 | dito | Cl | 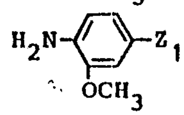 | dito | grünstichig gelb |
| 21 | dito | Cl | 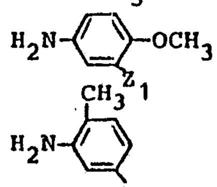 | dito | grünstichig gelb |
| 22 | dito | Cl | | dito | grünstichig gelb |
| 23 | dito | Cl | 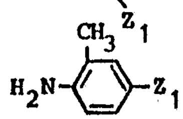 | dito | grünstichig gelb |
| 24 | dito | Cl | 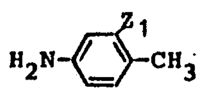 | dito | grünstichig gelb |
| 25 | dito | Cl | 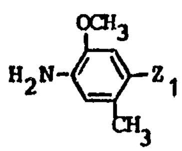 | dito | grünstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 26 | 1,3-Diaminobenzol-4-sulfonsäure | Cl | 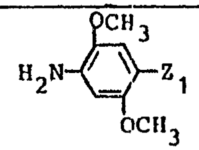 | 1-(ß-Sulfoäthyl)-4-methyl-6-hydroxy-2-pyridon | grünstichig gelb |
| 27 | dito | Cl | 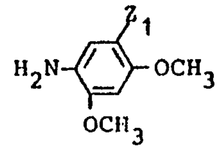 | dito | grünstichig gelb |
| 28 | dito | Cl | 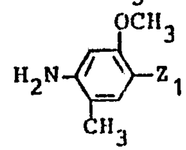 | dito | grünstichig gelb |
| 29 | dito | Cl | 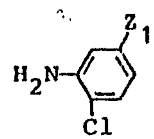 | dito | grünstichig gelb |
| 30 | dito | Cl | 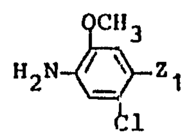 | dito | grünstichig gelb |
| 31 | 1,3-Diaminobenzol-4,6-disulfonsäure | Cl | 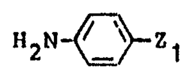 | dito | grünstichig gelb |
| 32 | dito | F | 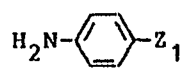 | dito | grünstichig gelb |

(Fortsetzung)

| Bsp. | Diamin der allg. Formel $H_2N$-D-$NH_2$ | Substituent X | Amin der allg. Formel (7) | Pyridonverbindung der allg. Formel (3) | Farbton |
|---|---|---|---|---|---|
| 33 | 1,3-Diaminobenzol-4,6-disulfonsäure | Cl | 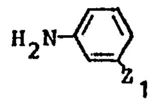 | 1-(ß-Sulfoäthyl)-4-methyl-6-hydroxy-2-pyridon | grünstichig gelb |
| 34 | dito | F | dito | dito | grünstichig gelb |
| 35 | 1,4-Diaminobenzol-2-sulfonsäure | Cl | 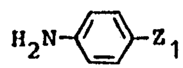 | dito | rotstichig gelb |
| 36 | 1,4-Diaminobenzol-2,5-disulfonsäure | Cl | dito | dito | rotstichig gelb |
| 37 | 1,3-Diaminobenzol-4-sulfonsäure | Cl | dito | 1-(ß-Sulfoäthyl)-3-carbamoyl-4-methyl-6-hydroxy-2-pyridon | grünstichig gelb |
| 38 | 1,3-Diaminobenzol-4,6-disulfonsäure | Cl | dito | dito | grünstichig gelb |
| 39 | 1,4-Diaminobenzol-2-sulfonsäure | Cl | dito | dito | grünstichig gelb |
| 40 | 1,4-Diaminobenzol-2,5-disulfonsäure | Cl | dito | dito | grünstichig gelb |
| 41 | 1,3-Diaminobenzol-4-sulfonsäure | Cl | dito | 1-(ß-Sulfoäthyl)-3-cyan-4-methyl-6-hydroxy-2-pyridon | gelb |
| 42 | 1,3-Diaminobenzol-4,6-disulfonsäure | Cl | dito | dito | gelb |
| 43 | 1,4-Diaminobenzol-2-sulfonsäure | Cl | dito | dito | rotstichig gelb |
| 44 | 1,4-Diaminobenzol-2,5-disulfonsäure | Cl | 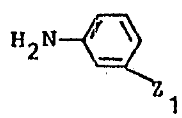 | dito | rotstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 45 | 1,3-Diaminobenzol-4-sulfonsäure | Cl | 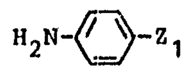 | 1-(ß-Sulfoäthyl)-4-methyl-6-hydroxy-2-pyridon-3-sulfonsäure | grünstichig gelb |
| 46 | 1,3-Diaminobenzol-4,6-disulfonsäure | Cl | dito | dito | grünstichig gelb |
| 47 | 1,4-Diaminobenzol-2-sulfonsäure | Cl | dito | dito | rotstichig gelb |
| 48 | 1,4-Diaminobenzol-2,5-disulfonsäure | Cl | dito | dito | rotstichig gelb |
| 49 | 1,3-Diaminobenzol-4-sulfonsäure | Cl | dito | 1-(ß-Carboxyäthyl)-3-cyan-4-methyl-6-hydroxy-2-pyridon | gelb |
| 50 | 1,3-Diaminobenzol-4,6-disulfonsäure | Cl | dito | dito | gelb |
| 51 | 1,4-Diaminobenzol-2-sulfonsäure | Cl | dito | dito | rotstichig gelb |
| 52 | 1,4-Diaminobenzol-2,5-disulfonsäure | Cl | dito | dito | rotstichig gelb |
| 53 | 1,3-Diaminobenzol-2-sulfonsäure | Cl | dito | 1-(ß-Carboxyäthyl)-3-carbamoyl-4-methyl-6-hydroxy-2-pyridon | grünstichig gelb |
| 54 | 1,3-Diaminobenzol-4,6-disulfonsäure | Cl | dito | dito | grünstichig gelb |
| 55 | 1,4-Diaminobenzol-2-sulfonsäure | Cl | dito | dito | rotstichig gelb |
| 56 | 1,4-Diaminobenzol-2,5-disulfonsäure | Cl | dito | dito | rotstichig gelb |
| 57 | 1,3-Diaminobenzol-4-sulfonsäure | Cl | dito | 1-(ß-Carboxyäthyl)-4-methyl-6-hydroxy-2-pyridon | grünstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 58 | 1,3-Diaminobenzol-4,6-disulfonsäure | Cl | 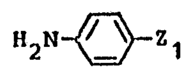 | 1-(ß-Carboxyäthyl)-4-methyl-6-hydroxy-2-pyridon | grünstichig gelb |
| 59 | 1,4-Diaminobenzol-2-sulfonsäure | Cl | dito | dito | rotstichig gelb |
| 60 | 1,4-Diaminobenzol-2,5-disulfonsäure | Cl | dito | dito | rotstichig gelb |
| 61 | 1,3-Diaminobenzol-4-sulfonsäure | Cl | dito | 1-(ß-Carboxyäthyl)-4-methyl-6-hydroxy-2-pyridon-3-sulfonsäure | grünstichig gelb |
| 62 | 1,3-Diaminobenzol-4,6-disulfonsäure | Cl | dito | dito | grünstichig gelb |
| 63 | 1,4-Diaminobenzol-2-sulfonsäure | Cl | dito | dito | rotstichig gelb |
| 64 | 1,4-Diaminobenzol-2,5-disulfonsäure | Cl | dito | dito | rotstichig gelb |
| 65 | 1,3-Diaminobenzol-2-sulfonsäure | Cl | dito | 1-Carboxymethyl-3-cyan-4-methyl-6-hydroxy-2-pyridon | gelb |
| 66 | 1,3-Diaminobenzol-4,6-disulfonsäure | Cl | dito | dito | gelb |
| 67 | 1,4-Diaminobenzol-2-sulfonsäure | Cl | dito | dito | rotstichig gelb |
| 68 | 1,4-Diaminobenzol-2,5-disulfonsäure | Cl | dito | dito | rotstichig gelb |
| 69 | 1,3-Diaminobenzol-4-sulfonsäure | Cl | dito | 1-Carboxymethyl-3-carbamoyl-4-methyl-6-hydroxy-2-pyridon | grünstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 70 | 1,3-Diaminobenzol-4,6-disulfonsäure | Cl | 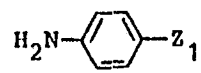 | 1-Carboxymethyl-3-carbamoyl-4-methyl-6-hydroxy-2-pyridon | grünstichig gelb |
| 71 | 1,4-Diaminobenzol-2-sulfonsäure | Cl | dito | dito | rotstichig gelb |
| 72 | 1,4-Diaminobenzol-2,5-disulfonsäure | Cl | dito | dito | rotstichig gelb |
| 73 | 1,3-Diaminobenzol-4-sulfonsäure | Cl | dito | 1-Carboxymethyl-4-methyl-6-hydroxy-2-pyridon | grünstichig gelb |
| 74 | 1,3-Diaminobenzol-4,6-disulfonsäure | Cl | dito | dito | grünstichig gelb |
| 75 | 1,4-Diaminobenzol-2-sulfonsäure | Cl | dito | dito | rotstichig gelb |
| 76 | 1,4-Diaminobenzol-2,5-disulfonsäure | Cl | dito | dito | rotstichig gelb |
| 77 | 1,3-Diaminobenzol-2-sulfonsäure | Cl | dito | 1-Carboxymethyl-4-methyl-6-hydroxy-2-pyridon-3-sulfonsäure | grünstichig gelb |
| 78 | 1,3-Diaminobenzol-4,6-disulfonsäure | Cl | dito | dito | grünstichig gelb |
| 79 | 1,4-Diaminobenzol-2-sulfonsäure | Cl | dito | dito | rotstichig gelb |
| 80 | 1,4-Diaminobenzol-2,5-disulfonsäure | Cl | dito | dito | rotstichig gelb |
| 81 | 1,3-Diaminobenzol-4-sulfonsäure | Cl | dito | 1-(ß-Hydroxyäthyl)-3-cyan-4-methyl-6-hydroxy-2-pyridon | gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 82 | 1,3-Diaminobenzol-4,6-disulfonsäure | Cl | 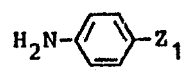 | 1-(ß-Hydroxyäthyl)-3-cyan-4-methyl-6-hydroxy-2-pyridon | gelb |
| 83 | 1,4-Diaminobenzol-2-sulfonsäure | Cl | dito | dito | rotstichig gelb |
| 84 | 1,4-Diaminobenzol-2,5-disulfonsäure | Cl | dito | dito | rotstichig gelb |
| 85 | 1,3-Diaminobenzol-4-sulfonsäure | Cl | dito | 1-(ß-Hydroxyäthyl)-3-carbamoyl-4-methyl-6-hydroxy-2-pyridon | grünstichig gelb |
| 86 | 1,3-Diaminobenzol-4,6-disulfonsäure | Cl | dito | dito | grünstichig gelb |
| 87 | 1,4-Diaminobenzol-2-sulfonsäure | Cl | dito | dito | rotstichig gelb |
| 88 | 1,4-Diaminobenzol-2,5-disulfonsäure | Cl | dito | dito | rotstichig gelb |
| 89 | 1,3-Diaminobenzol-2-sulfonsäure | Cl | dito | 1-(ß-Hydroxyäthyl)-4-methyl-6-hydroxy-2-pyridon | grünstichig gelb |
| 90 | 1,3-Diaminobenzol-4,6-disulfonsäure | Cl | dito | dito | grünstichig gelb |
| 91 | 1,4-Diaminobenzol-2-sulfonsäure | Cl | dito | dito | rotstichig gelb |
| 92 | 1,4-Diaminobenzol-2,5-disulfonsäure | Cl | dito | dito | rotstichig gelb |
| 93 | 1,3-Diaminobenzol-4-sulfonsäure | Cl | dito | 1-(ß-Hydroxyäthyl)-4-methyl-6-hydroxy-2-pyridon-3-sulfonsäure | grünstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 94 | 1,3-Diaminobenzol-4,6-disulfonsäure | Cl | 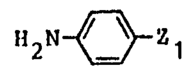 | 1-(ß-Hydroxyäthyl)-4-methyl-6-hydroxy-2-pyridon-3-sulfonsäure | grünstichig gelb |
| 95 | 1,4-Diaminobenzol-2-sulfonsäure | Cl | dito | dito | rotstichig gelb |
| 96 | 1,4-Diaminobenzol-2,5-disulfonsäure | Cl | dito | dito | rotstichig gelb |
| 97 | 1,3-Diaminobenzol-4-sulfonsäure | Cl | dito | 1-(ß-Sulfatoäthyl)-3-cyan-4-methyl-6-hydroxy-2-pyridon | gelb |
| 98 | 1,3-Diaminobenzol-4,6-disulfonsäure | Cl | dito | dito | gelb |
| 99 | 1,4-Diaminobenzol-2-sulfonsäure | Cl | dito | dito | rotstichig gelb |
| 100 | 1,4-Diaminobenzol-2,5-disulfonsäure | Cl | dito | dito | rotstichig gelb |
| 101 | 1,3-Diaminobenzol-2-sulfonsäure | Cl | dito | 1-(ß-Sulfatoäthyl)-3-carbamoyl-4-methyl-6-hydroxy-2-pyridon | grünstichig gelb |
| 102 | 1,3-Diaminobenzol-4,6-disulfonsäure | Cl | dito | dito | grünstichig gelb |
| 103 | 1,4-Diaminobenzol-2-sulfonsäure | Cl | dito | dito | rotstichig gelb |
| 104 | 1,4-Diaminobenzol-2,5-disulfonsäure | Cl | dito | dito | rotstichig gelb |
| 105 | 1,3-Diaminobenzol-4-sulfonsäure | Cl | dito | 1-(ß-Sulfatoäthyl)-4-methyl-6-hydroxy-2-pyridon | grünstichig gelb |

(Fortsetzung)

| Bsp. | Diamin der allg. Formel $H_2N$-D-$NH_2$ | Substituent X | Amin der allg. Formel (7) | Pyridonverbindung der allg. Formel (3) | Farbton |
|---|---|---|---|---|---|
| 106 | 1,3-Diaminobenzol-4,6-disulfonsäure | Cl | 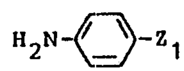 | 1-(ß-Sulfatoäthyl)-4-methyl-6-hydroxy-2-pyridon | grünstichig gelb |
| 107 | 1,4-Diaminobenzol-2-sulfonsäure | Cl | dito | dito | rotstichig gelb |
| 108 | 1,4-Diaminobenzol-2,5-disulfonsäure | Cl | dito | dito | rotstichig gelb |
| 109 | 1,3-Diaminobenzol-4-sulfonsäure | Cl | dito | 1-(ß-Sulfatoäthyl)-4-methyl-6-hydroxy-2-pyridon-3-sulfonsäure | grünstichig gelb |
| 110 | 1,3-Diaminobenzol-4,6-disulfonsäure | Cl | dito | dito | grünstichig gelb |
| 111 | 1,4-Diaminobenzol-2-sulfonsäure | Cl | dito | dito | rotstichig gelb |
| 112 | 1,4-Diaminobenzol-2,5-disulfonsäure | Cl | dito | dito | rotstichig gelb |
| 113 | 1,3-Diaminobenzol-2-sulfonsäure | Cl | dito | 1-(ß-Acetylaminoäthyl)-3-cyan-4-methyl-6-hydroxy-2-pyridon | gelb |
| 114 | 1,3-Diaminobenzol-4,6-disulfonsäure | Cl | dito | dito | gelb |
| 115 | 1,4-Diaminobenzol-2-sulfonsäure | Cl | dito | dito | rotstichig gelb |
| 116 | 1,4-Diaminobenzol-2,5-disulfonsäure | Cl | dito | dito | rotstichig gelb |
| 117 | 1,3-Diaminobenzol-4-sulfonsäure | Cl | dito | 1-(ß-Acetylaminoäthyl)-4-methyl-6-hydroxy-2-pyridon | grünstichig gelb |

(Fortsetzung)

| Bsp. | Diamin der allg. Formel $H_2N$-D-$NH_2$ | Substituent X | Amin der allg. Formel (7) | Pyridonverbindung der allg. Formel (3) | Farbton |
|---|---|---|---|---|---|
| 118 | 1,3-Diaminobenzol-4,6-disulfonsäure | Cl | 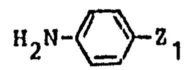 | 1-(ß-Acetylaminoäthyl)-4-methyl-6-hydroxy-2-pyridon | grünstichig gelb |
| 119 | 1,4-Diaminobenzol-2-sulfonsäure | Cl | dito | dito | rotstichig gelb |
| 120 | 1,4-Diaminobenzol-2,5-disulfonsäure | Cl | dito | dito | rotstichig gelb |
| 121 | 1,3-Diaminobenzol-4-sulfonsäure | Cl | dito | 1-(ß-Acetylaminoäthyl)-3-carbamoyl-4-methyl-6-hydroxy-2-pyridon | grünstichig gelb |
| 122 | 1,3-Diaminobenzol-4,6-disulfonsäure | Cl | dito | dito | grünstichig gelb |
| 123 | 1,4-Diaminobenzol-2-sulfonsäure | Cl | dito | dito | rotstichig gelb |
| 124 | 1,4-Diaminobenzol-2,5-disulfonsäure | Cl | dito | dito | rotstichig gelb |
| 125 | 1,3-Diaminobenzol-2-sulfonsäure | Cl | dito | 1-(ß-Acetylaminoäthyl)-4-methyl-6-hydroxy-2-pyridon-3-sulfonsäure | grünstichig gelb |
| 126 | 1,3-Diaminobenzol-4,6-disulfonsäure | Cl | dito | dito | grünstichig gelb |
| 127 | 1,4-Diaminobenzol-2-sulfonsäure | Cl | dito | dito | rotstichig gelb |
| 128 | 1,4-Diaminobenzol-2,5-disulfonsäure | Cl | dito | dito | rotstichig gelb |
| 129 | 1,3-Diaminobenzol-4-sulfonsäure | Cl | dito | 1-(ß-Acetylaminopropyl)-3-cyan-4-methyl-6-hydroxy-2-pyridon | gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 130 | 1,3-Diaminobenzol-4,6-disulfonsäure | Cl | 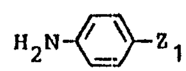 | 1-(ß-Acetylaminopropyl)-3-cyan-4-methyl-6-hydroxy-2-pyridon | gelb |
| 131 | 1,4-Diaminobenzol-2-sulfonsäure | Cl | dito | dito | rotstichig gelb |
| 132 | 1,4-Diaminobenzol-2,5-disulfonsäure | Cl | dito | dito | rotstichig gelb |
| 133 | 1,3-Diaminobenzol-4-sulfonsäure | Cl | dito | 1-(ß-Acetylaminopropyl)-3-carbamoyl-4-methyl-6-hydroxy-2-pyridon | grünstichig gelb |
| 134 | 1,3-Diaminobenzol-4,6-disulfonsäure | Cl | dito | dito | grünstichig gelb |
| 135 | 1,4-Diaminobenzol-2-sulfonsäure | Cl | dito | dito | rotstichig gelb |
| 136 | 1,4-Diaminobenzol-2,5-disulfonsäure | Cl | dito | dito | rotstichig gelb |
| 137 | 1,3-Diaminobenzol-2-sulfonsäure | Cl | dito | 1-(ß-Acetylaminopropyl)-4-methyl-6-hydroxy-2-pyridon | grünstichig gelb |
| 138 | 1,3-Diaminobenzol-4,6-disulfonsäure | Cl | dito | dito | grünstichig gelb |
| 139 | 1,4-Diaminobenzol-2-sulfonsäure | Cl | dito | dito | rotstichig gelb |
| 140 | 1,4-Diaminobenzol-2,5-disulfonsäure | Cl | dito | dito | rotstichig gelb |
| 141 | 1,3-Diaminobenzol-4-sulfonsäure | Cl | dito | 1-(ß-Acetylaminopropyl)-4-methyl-6-hydroxy-2-pyridon-3-sulfonsäure | grünstichig gelb |

(Fortsetzung)

| Bsp. | Diamin der allg. Formel $H_2N-D-NH_2$ | Substituent X | Amin der allg. Formel (7) | Pyridonverbindung der allg. Formel (3) | Farbton |
|---|---|---|---|---|---|
| 142 | 1,3-Diaminobenzol-4,6-disulfonsäure | Cl | 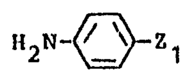 | 1-(ß-Acetylaminopropyl)-4-methyl-6-hydroxy-2-pyridon-3-sulfonsäure | rotstichig gelb |
| 143 | 1,4-Diaminobenzol-2-sulfonsäure | Cl | dito | dito | rotstichig gelb |
| 144 | 1,4-Diaminobenzol-2,5-disulfonsäure | Cl | dito | dito | rotstichig gelb |
| 145 | 2,4-Diaminotoluol-6-sulfonsäure | Cl | dito | 1-(ß-Sulfoäthyl)-4-methyl-6-hydroxy-2-pyridon | grünstichig gelb |
| 146 | dito | F | dito | dito | grünstichig gelb |

Anwendungsbeispiel 1

20 Teile der erfindungsgemäßen Verbindung (als Natriumsalz) von Beispiel 1 werden zusammen mit 50 Teilen Harnstoff in 300 Teilen Wasser gelöst. Die Lösung wird unterhalb von 40 °C in 400 Teile einer neutralen, wäßrigen 4 %igen Alginatverdickung eingerührt. Man gibt 10 Teile Natriumcarbonat hinzu und füllt das Ganze mit der 4 %igen wäßrigen Alginatverdickung auf eine Gesamtmenge von 1 000 Teilen auf. Man rührt gut durch und bedruckt mit der so hergestellten Druckpaste ein Baumwollgewebe, das nach dem Trocknen bei 60 °C in einem handelsüblichen Dämpferaggregat 5 Minuten lang mit Sattdampf von 100 bis 103 °C behandelt wird. Der so hergestellte Druck wird anschließend durch Spülen mit kaltem und heißem Wasser, durch Waschen mit einem neutralen Waschmittel und nochmaliges Spülen mit Wasser fertiggestellt. Nach dem Trocknen der Ware erhält man einen farbstarken grünstichig gelben Druck von sehr guter Lichtechtheit und von sehr guten Naßechtheitseigenschaften.

Anwendungsbeispiel 2

Ein Gewebe aus mercerisierter Baumwolle wird mit einer wäßrigen Färbeflotte von 20 °C bei einer Flottenaufnahme von 80 %, bezogen auf das Warengewicht, geklotzt, die im Liter 20 g des Natriumsalzes der erfindungsgemäßen Azoverbindung von Beispiel 1 sowie 18 g 33 %ige Natronlauge enthält. Das geklotzte Gewebe wird auf eine Docke gewickelt, in eine Folie eingeschlagen und acht Stunden bei Raumtemperatur liegengelassen. Anschließend wird es durch Spülen mit kaltem Wasser, durch Behandeln mit einem wenig Essigsäure enthaltenden wäßrigen Bad und durch nochmaliges Spülen in kaltem und heißem Wasser fertiggestellt. Nach dem Trocknen erhält man eine farbstarke grünstichig gelbe Färbung von sehr guter Lichtechtheit und von sehr guten Naßechtheiten.

Anwendungsbeispiel 3

100 Teile eines Gewebes aus mercerisierter Baumwolle werden 10 Minuten lang bei 60 °C in 3 000 Volumenteilen eines wäßrigen Färbebades behandelt, das 5 Teile des Natriumsalzes der erfindungsgemäßen Verbindung von Beispiel 1 sowie 150 Teile wasserfreies Natriumsulfat enthält. Nach dieser 10-minütigen Behandlung werden 15 Teile wasserfreies Natriumcarbonat und 4 Teile 33 %ige Natronlauge zugesetzt. Die Färbung wird 60 Minuten bei 60 °C weitergeführt. Anschließend wird das gefärbte Gewebe in üblicher Weise, wie beispielsweise im Anwendungsbeispiel 2, fertiggestellt. Man erhält eine farbstarke, grünstichig gelbe Färbung von sehr guter Lichtechtheit und von sehr guten Naßechtheiten.

Anwendungsbeispiel 4

100 Teile eines Wollgewebes werden in ein 40 °C warmes wäßriges Färbebad eingebracht, das aus 3 000 Teilen Wasser, 2 Teilen des Natriumsalzes der in Beispiel 1 beschriebenen erfindungsgemäßen Verbindung, 0,15 Teilen eines Anlagerungsproduktes von 12 Mol Äthylenoxid an 1 Mol Stearylamin, 2 Teilen Ammoniumacetat und 2 Teilen 60 %iger wäßriger Essigsäure besteht. Die Färbetemperatur wird innerhalb von 30 Minuten auf Kochtemperatur erhöht und die Färbung anschließend 60 Minuten lang bei 100 °C weitergeführt. Nach dem üblichen Auswaschen und Fertigstellen der erhaltenen Wollfärbung zeigt dieses Wollgewebe einen farbstarken, grünstichig gelben Farbton von sehr guter Lichtechtheit und von sehr guten Naßechtheiten.

Anwendungsbeispiel 5

Man verfährt in der im Anwendungsbeispiel 4 angegebenen Färbeweise, ersetzt jedoch das Wollgewebe durch 100 Teile eines Gewebes aus einer ε-Polycaprolactam-Faser. Man erhält ebenfalls eine farbstarke, grünstichig gelbe Färbung von guten Gebrauchsechtheiten.

Gemäß den obigen Anwendungsbeispielen lassen sich auch die anderen, hier in den Ausführungsbeispielen und Tabellenbeispielen beschriebenen erfindungsgemäßen Monoazoverbindungen in die Färbe- und Druckverfahren einsetzen. In analoger Weise erhält man beispielsweise mit diesen in den Anwendungsbeispielen 1 bis 5 beschriebenen Färbe- und Druckmethoden mit einem anderen Farbstoff der vorliegenden Erfindung ebenfalls sehr farbstarke Färbungen und Drucke von guten Licht- und Naßechtheitseigenschaften in den Farbtönen, die für das jeweilige Ausführungs- oder Tabellenbeispiel angegeben sind.

**Patentansprüche**

1. Wasserlösliche Monoazoverbindungen entsprechend der allgemeinen Formel (1)

(Siehe Schema Seite 26 f.)

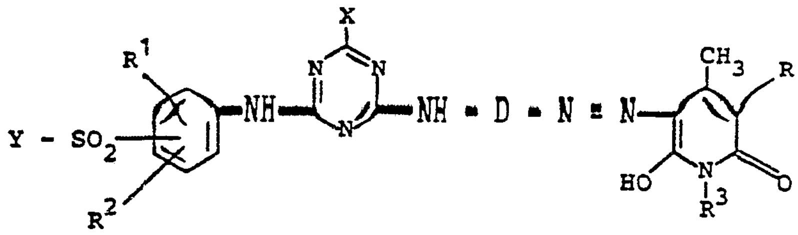

in welcher bedeuten

$R^1$ ist ein Wasserstoffatom, eine niedere Alkylgruppe, eine niedere Alkoxygruppe oder ein Chloratom ;

$R^2$ ist ein Wasserstoffatom, eine niedere Alkylgruppe oder eine niedere Alkoxygruppe ;

$R^3$ ist eine niedere Alkylgruppe, die durch eine Hydroxygruppe, eine niedere Alkanoylaminogruppe, eine Sulfatogruppe, eine Carboxygruppe oder eine Sulfogruppe substituiert ist ;

R ist ein Wasserstoffatom, die Carbamoylgruppe, die Cyangruppe oder die Sulfogruppe ;

D ist der meta- oder para-Phenylenrest, der durch eine oder zwei Sulfogruppen oder durch eine oder zwei Sulfogruppen und eine niedere Alkylgruppe substituiert ist ;

X ist ein Chlor- oder Fluoratom ;

Y ist die Vinylgruppe oder eine Äthylgruppe, die in β-Stellung einen als Anion alkalisch eliminierbaren Rest gebunden enthält ;

die Formelglieder $R^1$, $R^2$, $R^3$ und R können zueinander gleiche oder voneinander verschiedene Bedeutungen haben.

2. Verbindungen nach Anspruch 1, dadurch gekennzeichnet, daß D hier der meta- oder para-Phenylenrest ist, der durch eine oder zwei Sulfogruppen substituiert ist.

3. Verbindungen nach Anspruch 1, dadurch gekennzeichnet, daß die Gruppe $-SO_2-Y$ hier für eine ß-Sulfatoäthylsulfonyl-Gruppe oder für die Vinylsulfonylgruppe, jeweils in meta- oder para-Stellung zur Aminogruppe an den Benzolkern gebunden, steht.

4. Verbindungen nach Anspruch 1, 2 oder 3, dadurch gekennzeichnet, daß $R^3$ eine Alkylgruppe von 1 bis 3 C-Atomen bedeutet, die durch eine Sulfogruppe oder eine Carboxygruppe substituiert ist.

5. Verbindungen nach einem der Ansprüche 1, 2, 3 oder 4, dadurch gekennzeichnet, daß R eine Sulfogruppe oder die Cyangruppe bedeutet.

6. Verbindungen nach Anspruch 1 der dort angegebenen allgemeinen Formel (1), in welcher $R^1$ ein Wasserstoffatom ist, $R^2$ ein Wasserstoffatom oder eine Methoxy- oder Methylgruppe ist, die Gruppe $-SO_2-Y$ für die β-Sulfatoäthylsulfonyl-Gruppe oder Vinylsulfonylgruppe steht und in m- oder p-Stellung zur Aminogruppe an den Benzolkern gebunden ist, $R^3$ eine Alkylgruppe von 1 bis 4 C-Atomen bedeutet, die durch eine Carboxy-, Sulfo- oder Acetylamino- oder Propionylaminogruppe substituiert ist, R die Sulfo- oder Cyangruppe bedeutet, D der meta- oder para-Phenylenrest ist, der durch eine oder zwei Sulfogruppen substituiert ist, und X die in Anspruch 1 genannte Bedeutung besitzt.

7. Verbindungen nach Anspruch 1 der allgemeinen Formel

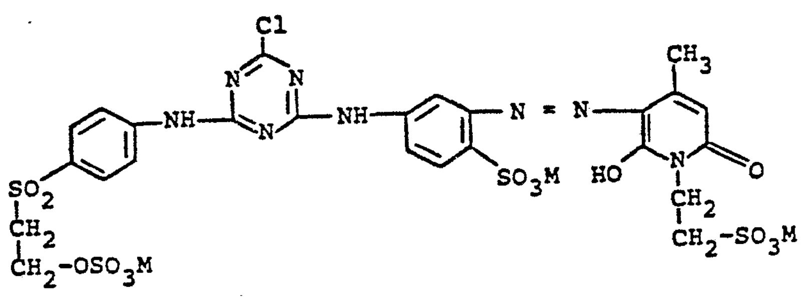

in welcher M ein Wasserstoffatom oder das Äquivalent eines ein-, zwei- oder dreiwertigen Metalls ist.

8. Verbindungen nach Anspruch 1 der allgemeinen Formel

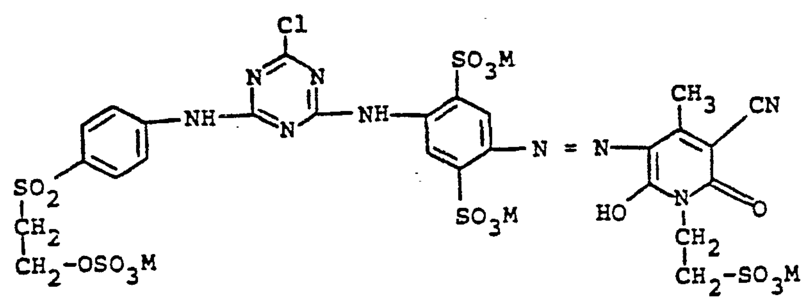

in welcher M ein Wasserstoffatom oder das Äquivalent eines ein-, zwei- oder dreiwertigen Metalls ist.

9. Verbindungen nach Anspruch 1 der allgemeinen Formel

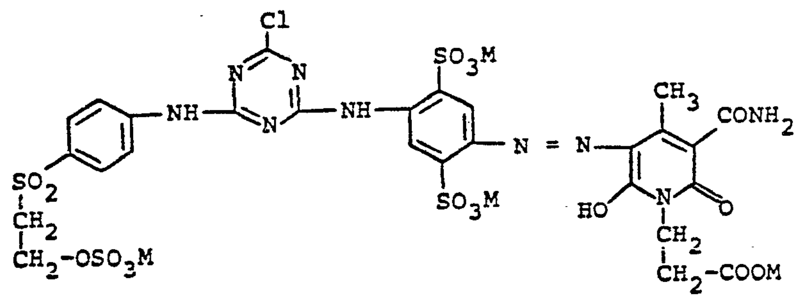

in welcher M ein Wasserstoffatom oder das Äquivalent eines ein-, zwei- oder dreiwertigen Metalls ist.

10. Verbindungen nach Anspruch 1 der allgemeinen Formel

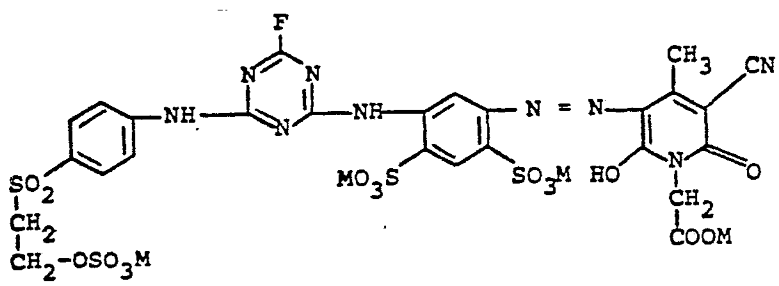

in welcher M ein Wasserstoffatom oder das Äquivalent eines ein-, zwei- oder dreiwertigen Metalls ist.

11. Die Natrium- oder Kaliumsalze der Verbindungen von Anspruch 1, 7, 8, 9 oder 10.

12. Verfahren zur Herstellung der in Anspruch 1 genannten und definierten Azoverbindungen der allgemeinen Formel (1), dadurch gekennzeichnet, daß man eine Diazoniumverbindung eines Amins der allgemeinen Formel (2)

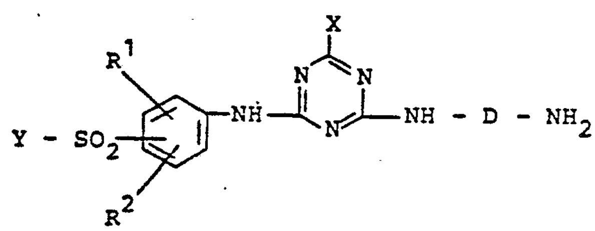

(2)

in welcher $R^1$, $R^2$, D, X und Y die in Anspruch 1 genannten Bedeutungen haben, mit einer Pyridonverbindung der allgemeinen Formel (3)

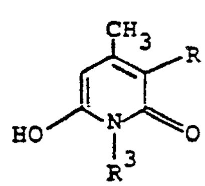

(3)

in welcher R und $R^3$ die in Anspruch 1 genannten Bedeutungen haben, kuppelt, oder daß man eine Aminoazoverbindung der allgemeinen Formel (4)

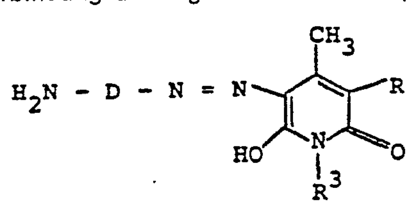

(4)

in welcher D, R und $R^3$ die in Anspruch 1 genannten Bedeutungen haben, mit einer Dihalogentriazin-Verbindung der allgemeinen Formel (5)

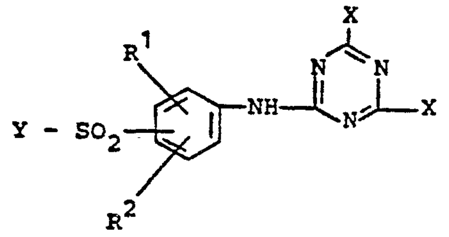

(5)

in welcher $R^1$, $R^2$, X und Y die in Anspruch 1 genannten Bedeutungen haben, umsetzt, oder daß man eine Dihalogentriazin-Verbindung der allgemeinen Formel (6)

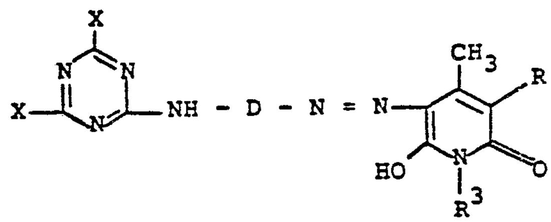

(6)

in welcher D, X, R und $R^3$ die in Anspruch 1 genannten Bedeutungen haben, mit einer Aminoverbindung der allgemeinen Formel (7)

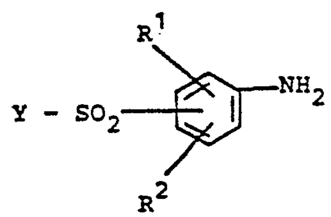

(7)

in welcher $R^1$, $R^2$ und Y die in Anspruch 1 genannten Bedeutungen haben, umsetzt.

13. Abänderung des Verfahrens nach Anspruch 12 zur Herstellung von in Anspruch 1 genannten und definierten Verbindungen der allgemeinen Formel (1), in welcher jedoch Y für einen Äthylrest steht, der in β-Stellung durch eine Estergruppe, vorzugsweise Sulfatogruppe, substituiert ist, dadurch gekennzeichnet, daß in den in Anspruch 12 genannten Ausgangsverbindungen der Formelrest Y für die β-Hydroxyäthyl-Gruppe steht und daß man die erhaltene Azoverbindung entsprechend der allgemeinen Formel (1), in welcher jedoch Y den β-Hydroxyäthyl-Rest bedeutet, mit einem Veresterungs- oder Acylierungsmittel, vorzugsweise Sulfatierungsmittel, umsetzt.

14. Verwendung der Verbindungen von Anspruch 1 zum Färben von hydroxy- und/oder carbonamidgruppenhaltigen Materialien, insbesondere Fasermaterialien.

## Claims

1. Water-soluble monoazo compounds corresponding to the general formula (1)

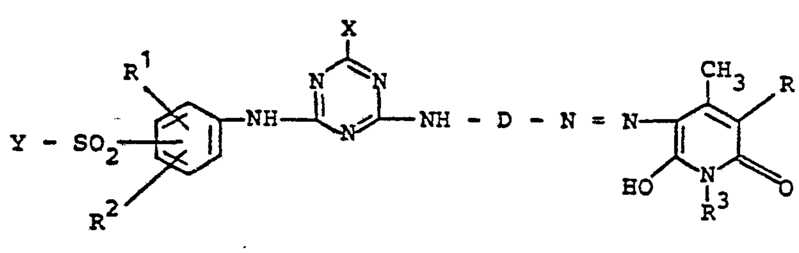

in which

$R^1$ is a hydrogen atom, a lower alkyl group, a lower alkoxy group or a chlorine atom ;

$R^2$ is a hydrogen atom, a lower alkyl group or a lower alkoxy group ;

$R^3$ is a lower alkyl group which is substituted by a hydroxy group, a lower alkanoylamino group, a sulfato group, a carboxy group or a sulfo group ;

R is a hydrogen atom, the carbamoyl group, the cyano group or the sulfo group ;

D is the meta- or para-phenylene radical, which is substituted by one or two sulfo groups or by one or two sulfo groups and a lower alkyl group ;

X is a chlorine or fluorine atom ;

Y is the vinyl group, or an ethyl group which contains bonded in the β-position a radical which can be eliminated under alkaline conditions as an anion ;

the formula moieties $R^1$, $R^2$, $R^3$ and R can be identical to or different from one another.

2. Compounds according to Claim 1, characterized in that D is the meta- or para-phenylene radical, which is substituted by one or two sulfo groups.

3. Compounds according to Claim 1, characterized in that the group $-SO_2-Y$ represents a β-sulfatoethylsulfonyl group or the vinylsulfonyl group, both being bonded to the benzene nucleus in the meta- or para-position relative to the amino group.

4. Compounds according to Claim 1, 2 or 3, characterized in that $R^3$ denotes an alkyl group of 1 to 3 C-atoms which is substituted by a sulfo group or a carboxy group.

5. Compounds according to Claim 1, 2, 3 or 4, characterized in that R denotes a sulfo group or the cyano group.

6. Compounds according to Claim 1, of the general formula (1) mentioned there, characterized by that $R^1$ is a hydrogen atom, $R^2$ is a hydrogen atom or a methoxy or methyl group, the group $-SO_2-Y$ represents the β-sulfatoethylsulfonyl group or vinylsulfonyl group and is bonded to the benzene nucleus in m- or p-position relative to the amino group, $R^3$ denote an alkyl group of 1 to 4 C-atoms which is substituted by a carboxy, sulfo or acetylamino or propionylamino group, R denotes the sulfo or cyano group, D is the meta- or para-phenylene which is substituted by one or two sulfo groups, and X has the meaning mentioned in claim 1.

7. Compounds according to Claim 1 of the general formula

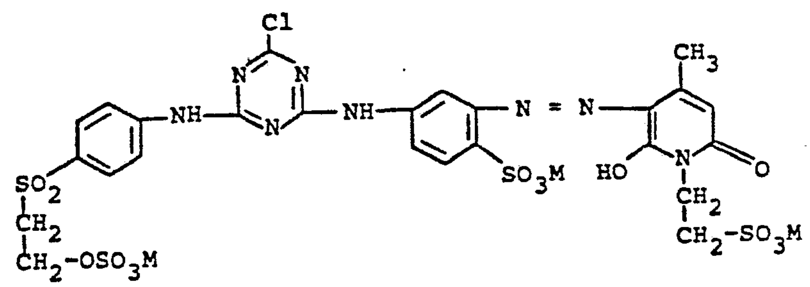

in which M is a hydrogen atom or the equivalent of a mono-, di- or trivalent metal.

8. Compounds according to Claim 1 of the general formula

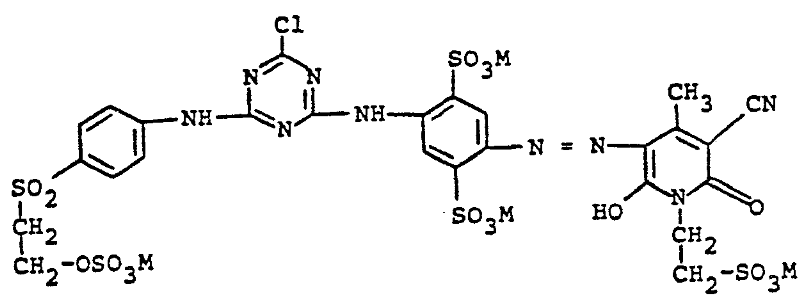

in which M is a hydrogen atom or the equivalent of a mono-, di- or trivalent metal.

9. Compounds according to Claim 1 of the general formula

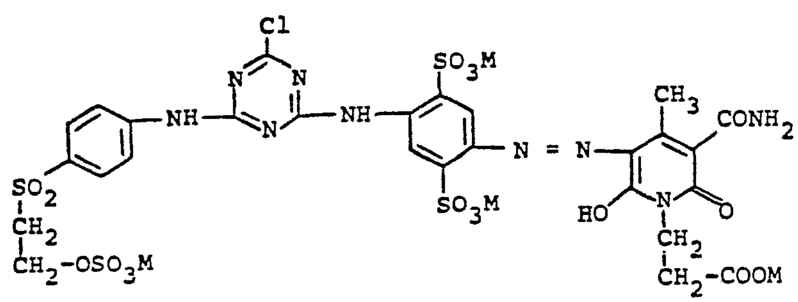

in which M is a hydrogen atom or the equivalent of a mono-, di- or trivalent metal.

10. Compounds according to Claim 1 of the general formula

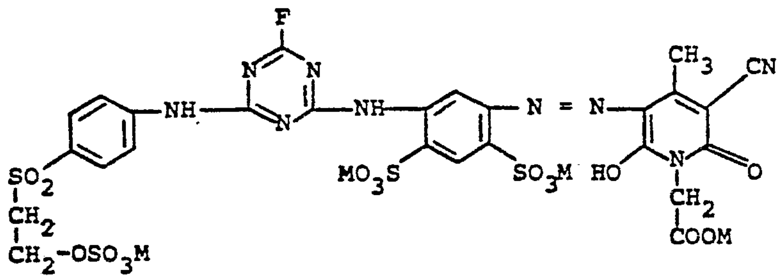

in which M is a hydrogen atom or the equivalent of a mono-, di- or trivalent metal.

11. The sodium or potassium salts of the compounds of Claim 1, 7, 8, 9 or 10.

12. A process for the preparation of the azo compounds of the general formula (1) mentioned and defined in claim 1, characterized by that a diazonium compound of an amine of the general formula (2)

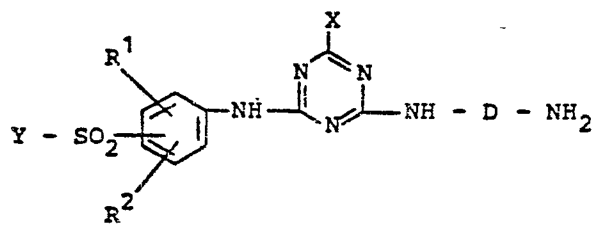

(2)

in which $R^1$, $R^2$, D, X and Y have the meanings mentioned in claim 1, is coupled with a pyridone compound of the general formula (3)

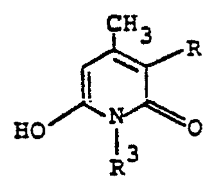

(3)

in which R and $R^3$ have the meanings mentioned in claim 1, or that an aminoazo compound of the general formula (4)

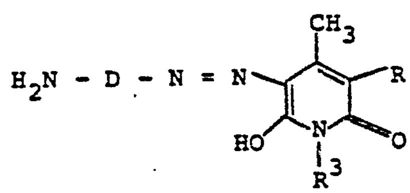

(4)

in which D, R and $R^3$ have the meanings mentioned in claim 1, is reacted with a dihalogenotriazine compound of the general formula (5)

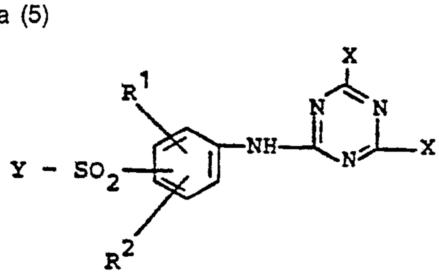

(5)

in which $R^1$, $R^2$, X and Y have the meanings mentioned in claim 1,
or that a dihalogenotriazine compound of the general formula (6)

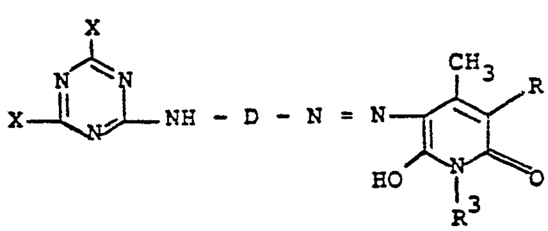

(6)

in which D, X, R and $R^3$ have the meanings mentioned in claim 1, is reacted with an amino compound of the general formula (7)

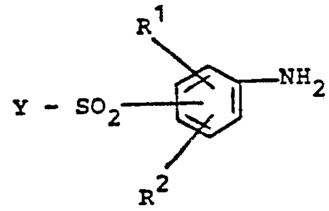

(7)

in which $R^1$, $R^2$ and Y have the meanings mentioned in claim 1.

13. A modification of the process of claim 12 for the preparation of the compounds of the formula (1) mentioned and defined in claim 1, in which, however, Y represents an ethyl radical which is substituted in the β-position by an ester group, preferably sulfato group, characterized by that the formula radical Y in the starting compounds mentioned in claim 12 represents the β-hydroxyethyl group and that the azo compound obtained and corresponding to the general formula (1) in which, however, Y denotes the β-hydroxyethyl radical, is reacted with an esterifying or acylating agent, preferably a sulfating agent.

14. The use of the compounds of claim 1 for coloring hydroxy- and/or carboxamide groups containing materials, in particular fiber materials.

**Revendications**

1. Composés mono-azoïques solubles dans l'eau qui répondent à la formule générale (1)

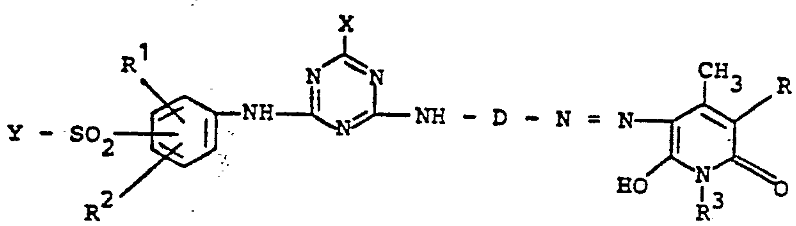

(1)

dans laquelle

$R^1$ représente un atome d'hydrogène, un radical alkyle inférieur, un radical alcoxy inférieur ou un atome de chlore,

$R^2$ représente un atome d'hydrogène, un radical alkyle inférieur ou un radical alcoxy inférieur,

$R^3$ représente un radical alkyle inférieur qui porte comme substituant un hydroxy, un alcanoylamino inférieur, un sulfato, un carboxy ou un sulfo,

R représente un atome d'hydrogène, un radical carbamoyle, un radical cyano ou un radical sulfo,

D représente un radical m-phénylène ou p-phénylène qui porte 1 ou 2 radicaux sulfo, ou 1 ou 2 radicaux sulfo et 1 radical alkyle inférieur,

X représente un atome de chlore ou de fluor, et

Y représente un radical vinyle ou un radical éthyle qui porte, en position β, un radical éliminable à l'état d'anion en milieu alcalin,

les radicaux $R^1$, $R^2$, $R^3$ et R pouvant être identiques les uns aux autres ou différents les uns des autres.

2. Composés selon la revendication 1 caractérisés en ce que D représente un radical m-phénylène ou p-phénylène qui porte un ou deux radicaux sulfo.

3. Composés selon la revendication 1 caractérisés en ce que le radical $-SO_2-Y$ est un radical sulfato-2 éthylsulfonyle ou un radical vinylsulfonyle, chacun en position méta ou para relativement au radical amino sur le noyau benzénique.

4. Composés selon l'une quelconque des revendications 1, 2 et 3, caractérisés en ce que $R^3$ représente un radical alkyle qui contient de 1 à 3 atomes de carbone et qui porte un radical sulfo ou un radical carboxy.

5. Composés selon l'une quelconque des revendications 1, 2, 3 et 4, caractérisés en ce que R représente un radical sulfo ou un radical cyano.

6. Composés de formule générale 1 selon la revendication 1 dans lesquels $R^1$ représente un atome d'hydrogène, $R^2$ représente un atome d'hydrogène ou un radical méthoxy ou méthyle, le radical $-SO_2-Y$ est un radical sulfato-2 éthylsulfonyle ou un radical vinylsulfonyle et est, sur le noyau benzénique, en position méta ou en position para relativement au radical amino, $R^3$ représente un radical alkyle qui contient de 1 à 4 atomes de carbone et qui porte un radical carboxy, sulfo, acétylamino ou propionylamino, R représente un radical sulfo ou cyano, D représente un radical m-phénylène ou p-phénylène porteur d'un ou de deux radicaux sulfo, et X a la signification donnée à la revendication 1.

7. Composés selon la revendication 1 qui répondent à la formule générale

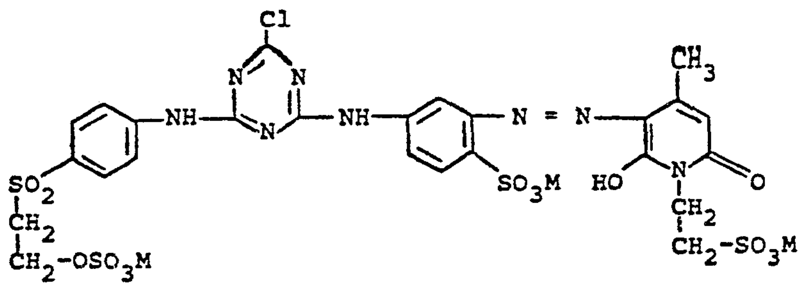

dans laquelle M représente un atome d'hydrogène ou l'équivalent d'un métal univalent, bivalent ou trivalent.

8. Composés selon la revendication 1 qui répondent à la formule générale

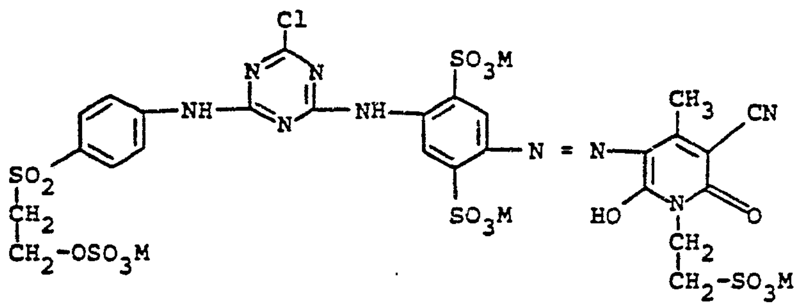

dans laquelle M représente un atome d'hydrogène ou l'équivalent d'un métal univalent, bivalent ou trivalent.

9. Composés selon la revendication 1 qui répondent à la formule générale

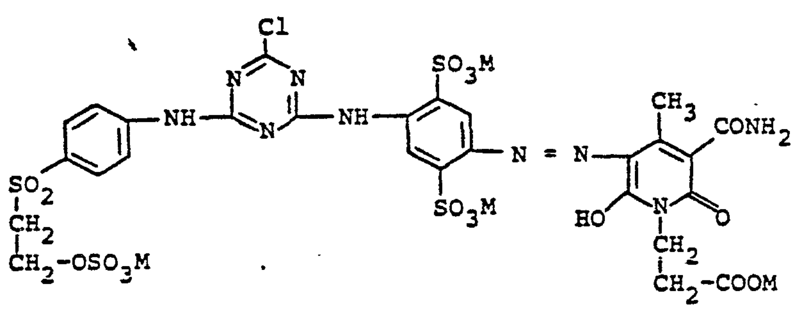

dans laquelle M représente un atome d'hydrogène ou l'équivalent d'un métal univalent, bivalent ou trivalent.

10. Composés selon la revendication 1 qui répondent à la formule générale

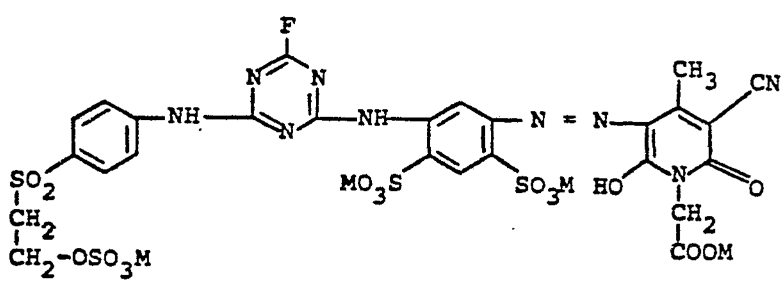

dans laquelle M représente un atome d'hydrogène ou l'équivalent d'un métal univalent, bivalent ou trivalent.

11. Sels sodiques ou potassiques des composés selon l'une des revendications 1, 7, 8, 9 et 10.

12. Procédé de préparation des composés azoïques répondant à la formule générale 1 qui a été représentée et définie à la revendication 1, procédé caractérisé en ce qu'on copule un dérivé de diazonium d'une amine répondant à la formule générale (2)

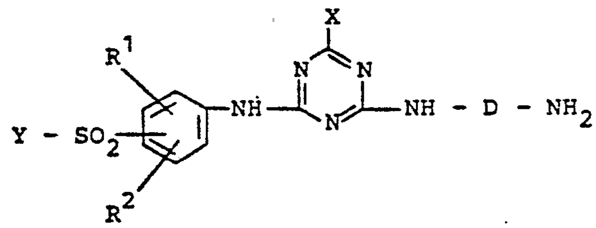

(2)

dans laquelle $R^1$, $R^2$, D, X et Y ont les significations données à la revendication 1, avec une pyridone répondant à la formule générale (3)

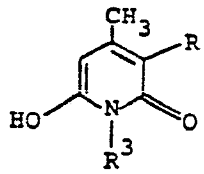

(3)

dans laquelle R et $R^3$ ont les significations données à la revendication 1, on fait réagir un composé aminoazoïque répondant à la formule générale (4)

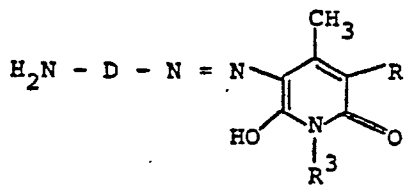

(4)

dans laquelle D, R et $R^3$ ont les significations données à la revendication 1, avec un composé dihalogénotriazinique répondant à la formule générale (5)

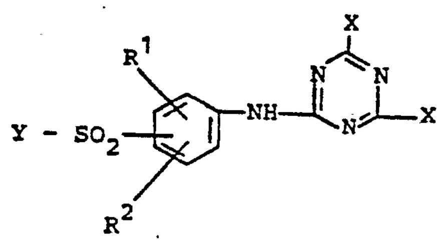

(5)

dans laquelle $R^1$, $R^2$, X et Y ont les significations données à la revendication 1,
ou on fait réagir un composé dihalogénotriazinique répondant à la formule générale (6)

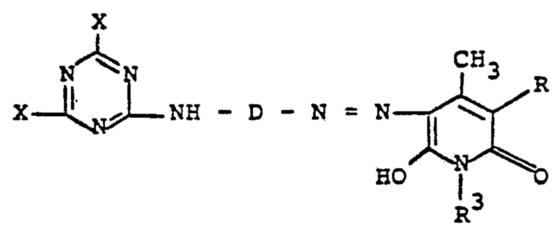

(6)

dans laquelle D, X, R et $R^3$ ont les significations données à la revendication 1, avec un composé aminé répondant à la formule générale (7)

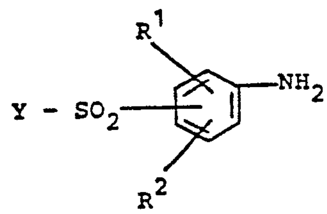

(7)

dans laquelle $R^1$, $R^2$ et Y ont les significations données à la revendication 1.

13. Variante du procédé selon la revendication 12 pour la préparation de composés répondant à la formule générale (1) qui a été représentée et définie à la revendication 1 mais dans laquelle Y représente un radical éthyle portant, en position β, un radical d'ester, de préférence un radical sulfato, variante caractérisée en ce que, dans les corps de départ mentionnés à la revendication 12, le radical Y est un radical hydroxy-2 éthyle et en ce qu'on fait réagir le composé azoïque obtenu qui répond à la formule générale (1) mais dans laquelle Y désigne un radical hydroxy-2 éthyle, avec un agent d'estérification ou d'acylation, de préférence avec un agent de sulfatation.

14. Application des composés selon la revendication 1 à la teinture de matières contenant des radicaux hydroxy et/ou des radicaux carbamoyles, plus particulièrement de matières fibreuses de ce genre.